(19) Europäisches Patentamt / European Patent Office / Office européen des brevets

(11) EP 3 186 328 B1

(12) # EUROPÄISCHE PATENTSCHRIFT

(45) Veröffentlichungstag und Bekanntmachung des Hinweises auf die Patenterteilung:
**09.01.2019 Patentblatt 2019/02**

(21) Anmeldenummer: **15753350.6**

(22) Anmeldetag: **17.08.2015**

(51) Int Cl.:
***C09J 133/06*** *(2006.01)*

(86) Internationale Anmeldenummer:
**PCT/EP2015/068808**

(87) Internationale Veröffentlichungsnummer:
**WO 2016/030220 (03.03.2016 Gazette 2016/09)**

(54) **WASSERRESISTENTE HAFTKLEBEMASSE ZUR VERKLEBUNG AUF FEUCHTEN OBERFLÄCHEN, INSBESONDERE IN AUTOMOBILANWENDUNGEN**

WATER-RESISTANT ADHESIVE MASS FOR BONDING ON WET SURFACES, IN PARTICULAR FOR USES WITH AUTOMOBILES

COMPOSITION ADHÉSIVE DE CONTACT RÉSISTANTE À L’EAU PERMETTANT UN COLLAGE SUR DES SURFACES HUMIDE, EN PARTICULIER DANS DES APPLICATIONS AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2014 DE 102014217193**

(43) Veröffentlichungstag der Anmeldung:
**05.07.2017 Patentblatt 2017/27**

(73) Patentinhaber: **tesa SE**
**22848 Norderstedt (DE)**

(72) Erfinder:
- **PREUSS, Philipp**
  **22851 Norderstedt (DE)**
- **ELLRINGMANN, Kai**
  **22589 Hamburg (DE)**

(56) Entgegenhaltungen:
**EP-A1- 2 116 584**
**WO-A1-93/13148**
**WO-A1-97/17411**
**WO-A2-2004/067661**
**DE-A1-102010 043 881**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 186 328 B1

Printed by Jouve, 75001 PARIS (FR)

## Beschreibung

Die Erfindung betrifft die Verwendung einer Haftklebemasse umfassend Acrylpolymere und ethylenisch ungesättigte Verbindungen mit mindestens einer Carbonsäure-Gruppe sowie flächige Haftmittel enthaltend diese Haftklebemasse zur Verklebung von Artikeln auf hoch polaren Oberflächen. Artikel sind insbesondere laserbeschriftbare und fälschungssichere Folien. Hoch polare Oberflächen umfassen adsorbierte migrationsfähige mindestens eine Hydroxy-Gruppe enthaltende Verbindungen. Diese sind beispielsweise zumindest teilweise benetzte, feuchte oder nasse Oberflächen.

Aus der DE 81 30 861 U1 sind laserbeschriftbare Etiketten mit einer äußeren und einer zweiten darunter angeordneten Lackschicht bekannt, wobei die Lackschicht aus Polyurethanacrylat und Hexandiolbisacrylat hergestellt wird. Durch Einfluss im Weatherometer für 500 Stunden werden keine Beeinträchtigungen des Materials beobachtet. Darauf aufbauend offenbart die DE 100 48 665 A1 laserbeschriftbare Etiketten mit einer elektronenstrahlgehärteten Lackschicht. Ein Verfahren zur Herstellung solcher laserbeschriftbaren Etiketten wird in der DE 101 42 638 A1 beschrieben, worin eine Gravierschicht mit einem UV-härtbaren Lack eingearbeitet wird. Durch eine zusätzliche Kompensationsschicht werden in der DE 10 2005 061 125 A1 Etiketten realisiert, die eine Beeinträchtigung durch hohe Temperaturen über 140 °C abpuffern. Dadurch werden Risse in der Acrylatklebemasse und damit Beeinträchtigungen der Verklebung auf dem Untergrund verhindert. Allerdings wird nicht auf die Wasserbeständigkeit solcher laserbeschriftbaren Folien und/oder Etiketten eingegangen und auch nicht, wie die Klebemasse die Wasserbeständigkeit der Produkte beeinflusst.

EP 2 116 584 offenbart eine Zusammensetzung zur Herstellung einer vernetzten Haftklebemasse, umfassend A) eine Haftklebemasse aus A1) einer Polymerkomponente auf Basis von a) einer oder mehrerer Verbindungen mit zumindest einer ethylenisch ungesättigten Bindung, wobei ein Teil der Verbindungen mit zumindest einer ethylenisch ungesättigten Bindung weiterhin eine Carboxylgruppe aufweist,b) Arylsäureester und/oder Methacrylsäureester, A2) zumindest einer Harzkomponente, und B) einem bi- oder polyfunktionellen Vernetzer.

Das Problem der Wasserbeständigkeit ergibt sich aus der Praxis, wo eine ausreichende Verklebung auf feuchten, nassen oder teilweise mit einem Flüssigkeitsfilm benetzten Oberflächen nicht gewährleistet werden kann. Häufig dringen darüber hinaus im Laufe der Zeit durch äußere Einflüsse Hydroxy-Gruppen haltige Verbindungen ein und beeinträchtigen die Verklebung.

In der EP 2 179 858 A1 wird ein hitzeresistentes brüchiges Etikett mit einer Lackschicht offenbart, worin für das enthaltene Glycolpolymer eine Wasserbeständigkeit beschrieben wird. Es werden für die Lackschicht Acrylpolymere (aus Acryl- und Methacryl-Monomeren) mit funktionellen Gruppen wie Carboxy- und OH-Gruppen offenbart, wodurch eine erhöhte Hydrophilie erzielt wird. Nähere Angaben zu einer potentiellen Wasserbeständigkeit der Produkte werden nicht offenbart.

Daher ist es Aufgabe der vorliegenden Erfindung, eine Haftklebemasse bereitzustellen, die eine hohe Wasserbeständigkeit (zum Beispiel bei Lagerung in Wasser) aufweist. Eine weitere Aufgabe der vorliegenden Erfindung ist es, eine Haftklebemassezusammensetzung für Klebschichten in laserbeschriftbaren Artikeln, insbesondere Etiketten, Folien oder Stanzlingen, bereitzustellen. Ferner soll dieser wasserbeständige laserbeschriftbare Artikel sowie das entsprechende Verfahren zu seiner Herstellung bereitgestellt werden. Ferner ist es Aufgabe der vorliegenden Erfindung, eine Haftklebemasse, insbesondere ein flächiges Haftmittel, und einen wasserbeständigen laserbeschriftbaren Artikel bereitzustellen, die beziehungsweise der eine permanente Haftung, insbesondere bei Wasserentzug, zum und an den Untergrund aufweisen. Eine weitere Aufgabe ist es, eine ausreichende Verklebung von Artikeln, insbesondere der vorgenannten, auf hochpolaren Oberflächen wie zumindest teilweise mit Hydroxy-Gruppen haltigen Verbindungen wie mit wässrigen Lösungen benetzten Oberflächen, zu verbessern und gleichzeitig die technischen Anforderungen an den laserbeschriftbaren Artikel zumindest beizubehalten oder zu verbessern. An das zu beschriftende Material solcher Artikel werden unter anderem die Anforderungen gestellt, dass es schnell beschriftbar sein soll, ein hohes räumliches Auflösungsvermögen bietet, es in der Anwendung möglichst einfach sein und die Zersetzungsprodukte nicht korrosiv wirken soll. Insbesondere ist es Aufgabe der vorliegenden Erfindung, einen Artikel bereitzustellen, welcher für das Verfahren der Laserablation gut geeignet ist, ohne Einschränkungen der anderen vorgenannten Eigenschaften.

Es wurde überraschenderweise gefunden, dass wider Erwarten eine erhöhte Polarität der Haftklebemassekomponenten zu einer verbesserten Wasserbeständigkeit bei gleichwertiger Verklebung führt. Der Fachmann würde erwarten, dass eine höhere Polarität eine bessere Wasseraufnahme ermöglicht und damit die Haftklebemasse auf feuchten Oberflächen oder in feuchter Umgebung versagen würde. Überraschend führt ein erhöhter Anteil an funktionellen Gruppen, insbesondere Wasserstoffbrücken-Bindungen bildende Gruppen, in der Haftklebemasse zu einer verbesserten Wasserbeständigkeit von verklebten Artikeln umfassend diese Haftklebemasse.

Die Lösung der Aufgaben wird durch die Gegenstände der unabhängigen Patentansprüche beschrieben und darüber hinaus in konkreter Ausgestaltung in den Unteransprüchen als auch detailliert in der Beschreibung sowie in den Beispielen dargestellt.

Es konnte überraschend festgestellt werden, dass bei Verwendung einer Haftklebemasse K auf Basis von Acrylatpolymeren die gewünschte Eignung auf hoch polaren, insbesondere feuchten Untergründen erzielt wird. Entsprechendes gilt für flächige Haftmittel und laserbeschriftbare Artikel.

Beschrieben wird die Verwendung einer Zusammensetzung der Haftklebmasse K zur Verklebung auf Oberflächen hoher Polarität, wobei die Haftklebemasse K das Vernetzungsprodukt ist aus einer Polymermasse (PM) umfassend mindestens die folgenden Komponenten

(A) mindestens eine Polymerkomponente A umfassend:

(i) größer gleich 60 Gew.-% bis kleiner gleich 80 Gew.-%, bezogen auf den Gehalt der Polymerkomponente A, mindestens einer Komponente A1, wobei die Komponente A1 umfasst:

(i-a) größer gleich 1 Gew.-% bis kleiner gleich 15 Gew.-%, bezogen auf den Gesamtgehalt der Komponente A1, mindestens eines Monomers a umfassend Verbindungen mit mindestens einer ethylenisch ungesättigten Bindung, das jeweils derart gewählt ist, dass die Glasübergangstemperatur $T_G$ des entsprechenden Homopolymers aus dem jeweiligen Monomer a mindestens 0 °C beträgt,
wobei mindestens ein Teil des Gesamtanteils am Monomer a als mindestens ein Monomer a1 (maximal 15 Gew.-% im Gesamtgehalt von A1) umfassend Verbindungen mit mindestens einer ethylenisch ungesättigten Bindung und mindestens einer Carbonsäure-Gruppe (-COOH) vorliegt, und
(i-b) größer gleich 85 Gew.-% bis kleiner gleich 99 Gew.-%, bezogen auf den Gesamtgehalt der Komponente A1, mindestens eines Monomers b ausgewählt aus der Gruppe der Acrylsäureester und/oder Methacrylsäureester, das jeweils derart gewählt ist, dass die Glasübergangstemperatur $T_G$ des entsprechenden Homopolymers aus dem jeweiligen Monomer b kleiner gleich -30 °C beträgt,

wobei das (i-a) mindestens eine Monomer a und das (i-b) mindestens eine Monomer b in Summe mit einem Anteil von 100 Gew.-% in der Komponente A1 (A1 = ad 100 Gew.-%) vorliegen,
(ii) größer gleich 20 Gew.-% bis kleiner gleich 40 Gew.-%, bezogen auf den Gehalt der Polymerkomponente A, mindestens einer Harzkomponente A2,

wobei die (i) mindestens eine Komponente A1 und die (ii) mindestens eine Harzkomponente A2 in Summe mit einem Anteil von 100 Gew.-% in der Polymerkomponente A (A = ad 100 Gew.-%) vorliegen und
(B) mindestens eine Vernetzerkomponente B umfassend kovalent vernetzende bi- oder polyfunktionelle Verbindungen,

wobei die (A) mindestens eine Polymerkomponente A und die (B) mindestens eine Vernetzerkomponente B in Summe mit einem Anteil von größer gleich 95 Gew.-% an der Gesamtzusammensetzung der Polymermasse (PM = ad 100 Gew.-%) vorliegen und wobei die Oberflächen hoher Polarität umfassen

(I) mindestens eine Hydroxy-, Carbonyl-, Carboxy-, SH-, NH- Gruppe und/oder mindestens eine ionische Gruppe und/oder
(II) mindestens eine adsorbierte migrationsfähige mindestens eine Hydroxy-Gruppe enthaltende Verbindung.

Insbesondere umfasst die Oberfläche hoher Polarität (Synonym dafür: hoch polare Oberfläche) zumindest teilweise mit Feuchtigkeit benetzte Oberflächen sowie nasse Oberflächen.

Die Haftklebemasse K haftet auf Oberflächen hoher Polarität, insbesondere auf (I) Oberflächen mineralischer Baustoffe und Oberflächen umfassend mindestens eine Harnstoff-, Amid- und/oder Isocyanat-Gruppe. Zu den mineralischen Baustoffen, welche natürlichen Ursprungs und überwiegend alkalisch und/oder porös sind, gehören Kalk, Zement, Gips, Lehm, Kalksandstein umfassend Branntkalk und Quarzsand, keramische Baustoffe, kaustische Magnesia, Anhydrit, Glas und Gemische aus mindestens zwei der vorgenannten Baustoffe oder Gemische mit Naturfasern wie zum Beispiel Hanffaser oder Cellulosefaser. Zu den Oberflächen umfassend mindestens eine Harnstoff-, Amid- und/oder Isocyanat-Gruppe gehören Kunststoffe, Beschichtungen und/oder Lacke enthaltend eine oder mehrere der genannten Gruppen. Beispiele für solche Kunststoffe sind Thermoplasten wie Polyamide, Duroplasten wie Polyurethane, Aminoplasten wie Polyharnstoff und Melamin.

Ebenfalls ein weiterer Aspekt ist, dass die Haftklebemasse K ein gutes Auffließen und eine gute Verklebung oder Haftung auf beziehungsweise an Oberflächen hoher Polarität aufweist wie zumindest teilweise feuchten beziehungsweise teilweise benetzten oder nassen Oberflächen sowie (II) Oberflächen, umfassend mindestens eine adsorbierte, migrationsfähige, mindestens eine Hydroxy-Gruppe enthaltende Verbindung, wobei die vorgenannte Verbindung ausgewählt wird aus $H_2O$, $H_2O$ in kondensierter Phase, $H_2O$ in Dampf, Wasserdampf, $H_2O$ in wässriger Lösung, $H_2O$ kristallin, $H_2O$ in Feuchte, $H_2O$ im Gemisch umfassend Öl, $H_2O$ in einer Emulsion, $H_2O$ in einer Dispersion, $H_2O$ in Rauch, mindestens einem Alkohol, einer wässrig alkoholischen Lösung, mindestens eine Hydroxy-Gruppe enthaltende

Verbindung in Gemischen mit Estern und/oder Gemische von mindestens zwei der vorgenannten Komponenten.

Die auf den hoch polaren Oberflächen adsorbierten vorgenannten mindestens eine Hydroxy-Gruppe enthaltenden Verbindungen stammen aus dem umgebenden Milieu, insbesondere Flüssigkeiten wie wässrige Lösungsmittel, wässrige Gemische enthaltend die vorgenannten Verbindungen zum Beispiel aus dem Motorraum wie Benzin oder Flüssigkeiten mit einem geringen Anteil Motoröl, Kühlwasser, Kühlflüssigkeit (Glycerin, Ethanol oder Ethylenglycol), Frostschutzmittel, Gemische, wässrige Gemische enthaltend in Lösung gegangene Gase aus dem Motorraum wie Abgase, wässrige Gemische enthaltend Partikel aus dem Motorraum wie Abrieb von Reifen, Abrieb von Bremsen und Feinstaub und wässrige Gemische, wie sie zum Beispiel aus einer jedermann bekannten Waschstraße stammen; ferner feuchte Luft, Nebel, Luftfeuchtigkeit, Eis, Eispartikel, Schnee und Schmelzwasser, Regen, Kondensate, Dampf, Aerosole sowie Streusalz enthaltende Gemische mit den vorgenannten Aggregatzuständen von Wasser.

Ein besonderer Aspekt ist, dass (II) die mindestens eine beschriebenen Hydroxy-Gruppe enthaltenden Verbindungen, insbesondere $H_2O$ und $H_2O$-haltige Verbindungen, mit der Haftklebemasse K Wasserstoffbrücken-Bindungen bilden. Daher ist ein weiterer Aspekt der vorliegenden Erfindung die Verwendung der Haftklebemasse K auf hoch polaren Oberflächen, wobei die mindestens eine Carbonsäure-Gruppe (-COOH) der Komponente A1 in der Polymermasse mit den polaren Oberflächen und/oder mit den auf den polaren Oberflächen adsorbierten migrationsfähigen Verbindungen supramolekulare Strukturen basierend auf einem Netzwerk von Wasserstoffbrücken-Bindungen ausbilden.

Insbesondere bilden die $H_2O$-Moleküle der vorgenannten adsorbierten migrationsfähigen Verbindungen mit den Carbonsäure-Gruppen der Haftklebemasse K Wasserstoffbrücken-Bindungen, insbesondere bilden die vorgenannten Verbindungen ausgedehnte supramolekulare Netzwerke. Die Carbonsäure-Gruppen stammen bevorzugt aus der Komponente A1, besonders bevorzugt aus dem Monomer a1.

In flächigen Ausbildungen der Haftklebemasse wird eine Vielzahl solcher Wasserstoffbrücken-Bindungen ausgebildet, und es entsteht ein mehrdimensionales Netzwerk aus Wasserstoffbrücken-Bindungen. Ein solches Wasserstoffbrücken-Bindungs-Netzwerk kann punktuell zum Beispiel bei nur teilweise mit $H_2O$ benetzten Oberflächen entstehen oder auch weit ausgedehnt und statistisch über die komplette Haftfläche zwischen dem Etikett und der zu kennzeichnenden Oberfläche wie zum Beispiel ein Bauteil ausgebildet sein. Dies ist zum Beispiel bei einer Oberfläche in einer Wasserdampf gesättigten Atmosphäre der Fall.

Die Wasserstoffbrücken-Bindungen werden zwischen der beschriebenen Carbonsäure-Gruppe des Monomers a1 mit den (I) Oberflächen mineralischer Baustoffe und Oberflächen umfassend mindestens eine Harnstoff-, Amid- und/oder Isocyanat-Gruppe und/oder (II) Oberflächen umfassend mindestens eine adsorbierte, migrationsfähige mindestens eine Hydroxy-Gruppe enthaltende Verbindung gebildet. Bevorzugt ist das Wasserstoffbrücken bildende Monomer a1 eine Acrylsäure, Methacrylsäure oder eine Mischung der beiden.

Ein weiterer Aspekt ist die Verwendung Haftklebemasse K, worin die Komponente A1 das (i-a) mindestens eine Monomer a umfasst, welches ausgewählt wird aus

- (a1) einem Monomer a1 umfassend ethylenisch ungesättigte Verbindungen mit einem $T_G$ von größer gleich 0 °C und mindestens einer Carbonsäure-Gruppe (-COOH),
- (a2) einem Monomer a2 umfassend ethylenisch ungesättigte Verbindungen mit einem $T_G$ größer gleich 0 °C und mindestens einer Ester-Gruppe und/oder
- (a3) einem Monomer a3 umfassend ethylenisch ungesättigte Verbindungen mit einem $T_G$ größer gleich 0 °C ohne Carbonsäure-Gruppe (-COOH) und Ester-Gruppen,

wobei der Anteil des Monomers a bei größer gleich 1 Gew.-% bis kleiner gleich 15 Gew.-% bezogen auf den Gesamtgehalt der Komponente A1 liegt. Insbesondere liegt der Anteil bei größer gleich 1 Gew.-%, vorzugsweise größer gleich 3 Gew.-%, bezogen auf den Gesamtgehalt der Komponente A1. Besonders bevorzugt liegt der Anteil des Monomers a in der Komponente A1 bei größer gleich 3 Gew.-% bis kleiner gleich 8 Gew.-%, größer gleich 3 Gew.-% bis kleiner gleich 5 Gew.-%. Dabei umfasst in jedem Fall die Komponente A1 mindestens ein Monomer a1, welches mit einem Anteil von größer gleich 1 Gew.-% bis kleiner gleich 8 Gew.-% vorliegt, insbesondere größer gleich 1 Gew.-%, vorzugsweise größer gleich 3 Gew.-%, besonders bevorzugt größer gleich 3 Gew.-% bis kleiner gleich 8 Gew.-%, größer gleich Alk3 Gew.-% bis kleiner gleich 5 Gew.-%, bezogen auf den Gesamtgehalt der Komponente A1.

In sehr vorteilhafter Weise beträgt der Anteil der Monomere a1 an der Komponente A1, also der Anteil der Monomere, die zumindest eine Carbonsäure-Gruppe aufweisen, größer gleich 3 Gew.-% bis kleiner gleich 5 Gew.-%, bezogen auf die Komponente A1. Ein Anteil von mindestens 3 Gew.-% Carbonsäure-Gruppen haltiger Monomere a sorgt für eine signifikante Reaktivitätserhöhung bezüglich des zugesetzten Vernetzers und führt zu guten Reaktionsgeschwindigkeiten des Vernetzungsprozesses. Gleichzeitig stellt ein Gehalt von größer gleich 3 Gew.-% bis kleiner gleich 5 Gew.-% Carbonsäure-Gruppen haltiger Monomere a eine ausreichende Wechselwirkung mit den hochpolaren Oberflächen, insbesondere der migrationsfähigen und adsorbierten mindestens eine Hydroxy-Gruppe enthaltenden Verbindungen sicher und damit eine gute Verklebung durch die Ausbildung einer ausgedehnten supramolekularen Struktur

zwischen der feuchten Oberfläche und der Haftklebemasse oder dem laserbeschriftbaren und/oder fälschungssicheren Etikett oder der Folie umfassend die Haftklebemasse K (siehe Beispiele, Adhäsive C, D und E).

Bei der Verwendung werden beim Verkleben insbesondere von laserbeschriftbaren und/oder fälschungssicheren Artikeln wie zum Beispiel Etiketten und Folien Wasserstoffbrücken-Bindungen zwischen den migrationsfähigen und adsorbierten mindestens eine Hydroxy-Gruppe enthaltenden Verbindungen gebildet, insbesondere $H_2O$ oder Gemische, wie sie bereits oben beschrieben sind, und den Carbonsäure-Gruppen des mindestens einen Monomers a1. Bevorzugt umfasst das mindestens eine Monomer a1 Verbindungen ausgewählt aus der Gruppe von ethylenisch ungesättigten Carbonsäuren umfassend Acrylsäure, Methacrylsäure und/oder Gemische der beiden. Folglich wird das vorbeschriebene Netzwerk aus Wasserstoffbrücken-Bindungen zwischen den migrationsfähigen und/oder adsorbierten Hydroxy-Gruppe enthaltenden Verbindungen und den Carbonsäure-Gruppen der Acrylsäure, Methacrylsäure und/oder Gemische der beiden gebildet.

Überraschenderweise führt das Netzwerk der vorbeschriebenen Wasserstoffbrücken-Bindungen zu einer starken Haftung zwischen der Haftklebemasse K, insbesondere einem daraus erhältlichen flächigen Haftmittels, und den bereits beschriebenen hoch polaren Oberflächen (Beispiel 3, 5 und 6). Dies stellt eine besonders gute Haftung von Etiketten umfassend die Haftklebemasse K auf den zu kennzeichnenden Oberflächen dar wie Bauteile und elektronische Geräte insbesondere im Automobilbereich.

Dies belegen die Beispiele 1 bis 6, in denen gezeigt wird, dass eine erhöhte Polarität der Haftklebemasse (wie im Adhäsiv C, D und Adhäsiv E) zu einer erhöhten Wasserbeständigkeit führt. Ferner zeigen die Beispiele, dass eine erhöhte Kohäsion/Weichheit der Haftklebemasse einen positiven Einfluss auf die Wasserbeständigkeit hat. Insbesondere eher harte Haftklebemassen wie die im Adhäsiv A können nicht so gut auf dem Untergrund beziehungsweise Oberfläche eines Substrates auffließen, diese benetzten und anhaften, wodurch Wasser leichter an der Grenzfläche zwischen Haftklebemasse und Untergrund beziehungsweise Oberfläche eindringen kann, insbesondere durch Mikroporen und Kanäle. Durch das eindringende Wasser wird das Wasserstoffbrücken-Bindungs-Netzwerk unterbrochen, wodurch die Haftung zunächst punktuell abnimmt. Dies schwächt die Haftung insgesamt und die auftretenden Scherkräfte an dem Übergang von abgelöster Haftklebemasse zur haftenden Haftklebemasse schwächen das Wasserstoffbrücken-Bindungs-Netzwerk, was zu einer Kettenreaktion führen und die vollständige Ablösung des Artikels wie des Etikettes bedingen kann.

Weiche Haftklebemassen wie das Adhäsiv D oder E können sehr gut auf einer Oberfläche auffließen. Zusätzlich begünstigt eine höhere Verklebungszeit größer gleich 1 Stunde, vorzugsweise größer gleich 24 Stunden, besonders bevorzugt größer gleich 72 Stunden die Haftung zwischen der Haftklebemasse und dem Untergrund. Die Verklebungszeit ist der Zeitraum, in dem ein Auffließen, Benetzen und Anhaften der Haftklebemasse an den Untergrund zugelassen wird, ohne Einwirkung einer Störung, insbesondere einer Kraft wie Zug- oder Scherkraft.

Gleichzeitig wird das Auftreten von Mikroluftblasen durch eine längere Verklebungszeit vermindert, da die Luft gut entweichen kann, insbesondere bei weicheren Haftklebemassen wie im Adhäsiv D. Eine Reduzierung von Mikroluftblasen führt zu einer besseren Haftung der Haftklebemasse aufgrund einer erhöhten Anzahl an molekularen Wechselwirkungen in Form von Wasserstoffbrücken-Bindungen. Folglich führt ein starkes Wasserstoffbrücken-Bindungs-Netzwerk zu einer verbesserten Dichtigkeit, insbesondere an den Kanten der Etiketten, wodurch von außen weniger Wasser eindringen kann. Somit wird mit der erfindungsgemäßen Haftklebemasse K ein wasserbeständiger laserbeschriftbarer Artikel, insbesondere ein solches Etikett, erzielt.

In einer bevorzugten Ausführungsform weist das Adhäsiv, insbesondere die Haftklebemasse, nicht nur eine hervorragende Wasserbeständigkeit bei 40 °C und 60 °C auf, sondern auch eine gute Hochtemperaturbeständigkeit bei 90 °C (Beispiel 5 und 6).

Für die Ausbildung solcher Wasserstoffbrücken-Bindungen kann die Komponente A1 ausschließlich Monomere a1 umfassen. Es ist aber auch denkbar, dass ein Teil der Monomere a1 durch einen Teil an weiteren Comonomeren (i-a) ersetzt wird, die jeweils derart gewählt sind, dass die Glasübergangstemperatur $T_G$ der entsprechenden Homopolymere aus dem jeweiligen Monomer mindestens 0 °C beträgt, die aber keine Carbonsäure-Gruppe (-COOH) aufweisen. Allerdings nur insoweit, dass mindestens 3 Gew.-%, vorzugsweise mindestens 5 Gew.-% des Monomers a1, vorzugsweise Acrylsäure, in der Komponente A1 erhalten bleiben.

Im Sinne der Comonomere (i-a) lassen sich hervorragend teilweise Monomere a2 einsetzen, die gewählt sind aus der Gruppe der Verbindungen mit zumindest einer ethylenisch ungesättigten Bindung, und zwar derart, dass die Glasübergangstemperatur $T_G$ der entsprechenden Homopolymere aus dem jeweiligen Monomer a2 mindestens 0 °C beträgt, wobei das Monomer a2 weiterhin zumindest eine Estergruppe mit einem Ethyl- und/oder Methylrest aufweist. Insbesondere handelt es sich um Acrylsäure- und/oder Methacrylsäureester, so dass die Gruppe der Monomere a2 dann Acrylsäuremethylester, Acrylsäureethylester, Methacrylsäuremethylester und Methacrylsäureethylester umfasst. Mittels der Monomere a2 lässt sich die Polarität der Haftklebemasse K beeinflussen.

Die Komponente A1 kann ausschließlich das Monomer a1, oder ausschließlich das Monomer a1 und Monomer a2 umfassen. Allerdings kann auch ein Teil des Monomers a1, ein Teil des Monomers a2 und ein Teil an einem weiteren Comonomer a3 in der Komponente A1 enthalten sein. Dabei trägt das Monomer a3 weder eine Carbonsäure-Gruppe

(-COOH) noch eine Ester-Gruppe mit einem Ethyl- und/oder Methylrest. Es ist auch möglich, dass die Komponente A1 ausschließlich das Monomere a1 und a3 umfasst. Mittels der Monomere a3 können die Glasübergangstemperatur und/oder die Glasübergangsfrequenz der resultierenden Haftklebemasse K in Richtung auf den letztlich angestrebten Wert reguliert werden. In jedem Fall bleibt zumindest ein Anteil von größer gleich 3 Gew.-% bis kleiner gleich 8 Gew.-% des Monomers a1 in der Komponente A1 erhalten.

Als Monomere a3, welche weder eine Carbonsäure-Gruppe (-COOH) noch eine Ester-Gruppe mit einem Ethyl- und/oder Methylrest umfassen, lassen sich beispielsweise und ohne Anspruch auf Vollständigkeit folgende Monomere einsetzen: Benzylacrylat, Benzylmethacrylat, Phenylacrylat, Phenylmethacrylat, Isobornylacrylat, Isobornylmethacrylat, t-Butylphenylacrylat, t-Butylphenylmethacrylat, Cyclohexylmethacrylat, 3,3,5-Trimethylcyclohexylacrylat, 4-Biphenylacrylat, 4-Biphenylmethacrylat, 2-Naphthylacrylat, 2-Naphthylmethacrylat, Phenoxyethylacrylat, Phenoxyethylmethacrylat, Dimethylaminopropylacrylamid, Dimethylaminopropylmethacrylamid, weiterhin N,N-Dialkyl-substituierte Amide, wie beispielsweise N,N-Dimethylacrylamid, Acrylnitril, Vinylether, wie Vinylmethylether, Ethylvinylether, Vinylisobutylether, Vinylester, Styrol, a- und p-Methylstyrol, Makromonomere, wie 2-Polystyrolethylmethacrylat (Molekulargewicht $M_w$ von 4000 bis 13000 g/mol), Poly(Methylmethacrylat)ethylmethacrylat ($M_w$ von 2000 bis 8000 g/mol).

Ein weiterer Aspekt ist die Verwendung der Haftklebemasse K, wobei das mindestens eine Monomer b mit einem $T_G$ von kleiner gleich -30 °C ausgewählt wird aus der Gruppe umfassend Acrylsäureester mit linearen, verzweigten und/oder durch funktionelle Gruppen substituierte Alkylreste, wobei der lineare Alkylrest größer gleich 3 Kohlenstoffatome bis kleiner gleich 14 Kohlenstoffatome aufweist, vorzugsweise größer gleich 4 bis kleiner gleich 9 Kohlenstoffatome. Bevorzugt wird das mindestens eine Monomer b ausgewählt aus

(a) unsubstituierten linearen Acrylsäureestern umfassend Methylacrylat, Butylacrylat, Propylacrylat, n-Pentylacrylat, n-Hexylacrylat, n-Heptylacrylat, n-Octylacrylat, n-Nonylacrylat, n-Decylacrylat, n-Undecylacrylat, n-Dodecylacrylat, n-Tridecylacrylat, n-Tetradecylacrylat und/oder
(b) verzweigten unsubstituierten und/oder substituierten Acrylsäureester umfassend 2-Heptylacrylat, 2-Octylacrylat, Ethylhexylacrylat, 2-Ethoxyethylacrylat, 2-Ethylhexylacrylat, 2-Ethylbutylacrylat, 3-Methoxybutylacrylat, 2-Methoxyethylacrylat, 3-Methoxypropylacrylat, 3-Methylbutylacrylat und Isodecylacrylat.

Der Gehalt des Monomers b in der Haftklebemasse K beträgt größer gleich 87 Gew.-% bis kleiner gleich 100 Gew.-%,vorzugsweise 95 Gew.-% bis kleiner gleich 97 Gew.-% bezogen auf den Gesamtgehalt der Komponente A1.

Bevorzugte unsubstituierte lineare Ester der Acrylsäure im Sinne von Monomer b sind Acrylsäurealkylester mit einem Alkylrest wie Methyl, Ethyl, Propyl, Butyl, Pentyl und Hexyl. Besonders bevorzugte Acrylsäureester sind Methylacrylat und Butylacrylat. Bevorzugte verzweigte Ester der Acrylsäure im Sinne von Monomer b sind Ethylhexylester und 2-Ethoxyethylacrylat.

Somit umfasst die Komponente A1

(i-a) größer gleich 1 Gew.-% bis kleiner gleich 15 Gew.-%, bezogen auf den Gesamtgehalt der Komponente A1, mindestens eines Monomers a umfassend Verbindungen mit mindestens einer ethylenisch ungesättigten Bindung, das jeweils derart gewählt ist, dass die Glasübergangstemperatur $T_G$ des entsprechenden Homopolymers aus dem jeweiligen Monomer a mindestens 0 °C beträgt,
wobei mindestens ein Teil des Gesamtanteils am Monomer a als mindestens ein Monomer a1 umfassend Verbindungen mit mindestens einer ethylenisch ungesättigten Bindung und mindestens einer Carbonsäure-Gruppe (-COOH) vorliegt, insbesondere mit einem Anteil von mindestens 3 Gew.-% bis kleiner gleich 8 Gew.-% bezogen auf den Gesamtgehalt der Komponente A1 und
(i-b) größer gleich 85 Gew.-% bis kleiner gleich 99 Gew.-%, bezogen auf den Gesamtgehalt der Komponente A1 (A1 = ad 100 Gew.-%), mindestens eines Monomers b ausgewählt aus der Gruppe der Acrylsäureester und/oder Methacrylsäureester, das jeweils derart gewählt ist, dass die Glasübergangstemperatur $T_G$ des entsprechenden Homopolymers aus dem jeweiligen Monomer b kleiner gleich -30 °C beträgt,
wobei das (i-a) mindestens eine Monomer a und das (i-b) mindestens eine Monomer b in Summe mit einem Anteil von 100 Gew.-% in der Komponente A1 (A1 = ad 100 Gew.-%) vorliegen.

Bevorzugte Kombinationen der Monomere a und b in der Zusammensetzung der Komponente A1 sind als Monomer a1 Acrylsäure und/oder Methacrylsäure und als Monomer b lineare unsubstituierte Acrylsäureester, vorzugsweise Methylacrylat und/oder Butylacrylat sowie verzweigte unsubstituierte Acrylsäurester, vorzugsweise Ethylhexylacrylat, jeweils unabhängig mit einem $T_G$ von kleiner gleich -30 °C.

Bevorzugt umfasst die Komponente A1 (Gew.-% bezogen auf 100 Gew.-% Komponente A1:

| | | |
|---|---|---|
| Monomer a1: | 3 Gew.-% bis 5 Gew.-% Acrylsäure | |
| Monomer b: | Butylacrylat | 40 Gew.-% bis 48,5 Gew.-%,<br>vorzugsweise 43,5 Gew.-% bis 48,5 Gew.-%<br>besonders 43,5 Gew.-%, 47,5 Gew.-% oder 48,5 Gew.-% |
| | Ethylhexylacrylat | 40 Gew.-% bis 48,5 Gew.-%,<br>vorzugsweise 43,5 Gew.-% bis 48,5 Gew.-%<br>besonders 43,5 Gew.-%, 47,5 Gew.-% oder 48,5 Gew.-% |
| | Methylacrylat | 0,0 Gew.-% bis 15 Gew.-%<br>vorzugsweise 10 Gew.-% |

Die Angaben der Glasübergangstemperaturen $T_G$ beziehen sich auf die Bestimmung mittels dynamisch mechanischer Analyse (DMA) bei geringen Frequenzen (siehe hinten; Abschnitt "Messmethoden"), sofern im Einzelfall nichts anderes angegeben ist.

Die Polymerkomponente A (A = A1 + A2) umfasst neben der Komponente A1 eine Harzkomponente A2. Der Anteil der Harzkomponente A2 in der Polymerkomponente A beträgt größer gleich 20 Gew.-% bis kleiner gleich 40 Gew.-%, insbesondere größer gleich 20 Gew.-%, 25 Gew.-%, 30 Gew.-% und 35 Gew.-% oder kleiner gleich 40 Gew.-%, wobei die Harzkomponente A2 ein oder mehrere Harze umfasst. Als Harze im Sinne der vorliegenden Erfindung werden oligo- und polymere Verbindungen mit einem zahlenmittleren Molekulargewicht $M_n$ von nicht mehr als 5.000 g/mol angesehen (mittels Gelpermeationschromatographie bestimmt). Insbesondere hat der überwiegende Teil der Harze (bezogen auf den Gewichtsteil an der gesamten Harzkomponente), bevorzugt haben alle Harze, einen Erweichungspunkt von größer gleich 80 °C bis kleiner gleich 150 °C. Die Angaben zum Erweichungspunkt $T_E$ von polymeren Verbindungen erfolgen in Bezug auf mittels des Ring-Kugel-Verfahrens gemäß der ASTM E28-99 (2009) bestimmte Werte, sofern im Einzelfall nichts anderes angegeben ist.

Im Sinne der Harzkomponente A2 lassen sich natürliche und/oder synthetische Harze einsetzen. Prinzipiell lassen sich alle Harze verwenden, deren Erweichungspunkt im genannten Temperaturbereich liegt. Geeignete Klebharze umfassen unter anderem Kolophonium und Kolophoniumderivate (Kolophoniumester, auch durch zum Beispiel Disproportionierung oder Hydrierung stabilisierte Kolophoniumderivate), Polyterpenharze, Terpenphenolharze, Alkylphenolharze, aliphatische, aromatische und aliphatischaromatische Kohlenwasserstoffharze, um nur einige zu nennen. Sehr bevorzugt werden Harze gewählt, die mit der Polyacrylatkomponente verträglich, insbesondere in ihr löslich beziehungsweise mit ihr homogen mischbar, sind. Im Sinne der vorliegenden Erfindung sind Terpenphenol-Harze sehr gut geeignet. Die Beimischung einer Harzkomponente kann vorteilhaft zur Regulierung des Glasübergangsbereiches der Haftklebemasse (als Ganzes) eingesetzt werden.

Zur Vernetzung der Haftklebemasse K, um das Vernetzungsprodukt der Polymermasse (PM = A + B) zu erhalten, wird zur Polymerkomponente A mindestens ein bi- oder polyfunktioneller Vernetzer (Vernetzerkomponente B) in einer definierten Menge zugesetzt. Der Vernetzer ist in der Lage über die Carbonyl-Gruppe der Carbonsäure-Gruppen der Komponente A, insbesondere über die eingeführten Monomere a1, kovalent zu vernetzen.

Erfindungsgemäß ist der mindestens eine Vernetzer der Haftklebemasse K in einer Menge zugesetzt, dass das Verhältnis V (V = nZ/nP) im Bereich von 0,15 bis 0,60 liegt. Bevorzugt beträgt der Wert V 0,2 oder mehr, insbesondere liegt er im Bereich von 0,22 bis 0,58.

In einer bevorzugten Ausführungsform wird die Haftklebemasse K in einer Zusammensetzung verwendet, in der der Haftklebemasse K die Vernetzerkomponente B mit einem Mengenverhältnis von V = nZ/nP der Stoffmenge nZ der vernetzungsaktiven Zentren des Vernetzers zu der theoretischen Stoffmenge nP der Makromoleküle der Komponente A1 mit einem Wert von größer gleich 0,15 bis kleiner gleich 0,60 umfasst, vorzugsweise größer gleich 0,38 bis kleiner gleich 0,59, wobei sich die Stoffmenge nZ der vernetzungsaktiven Zentren des Vernetzers aus der mit der Anzahl f der vernetzungsaktiven Zentren pro Vernetzermolekül multiplizierten Masse mV des Vernetzers geteilt durch die Molmasse MV des Vernetzers, also nZ = f.mV/MV ergibt, und die theoretische Stoffmenge nP der Makromoleküle der Komponente A1 sich aus der Masse mP der Polymerkomponente in der Haftklebemasse K geteilt durch die zahlenmittlere Molmasse Mn,P dieser Komponente, also nP = mP/Mn,P ergibt, wobei die (A) mindestens eine Polymerkomponente A und die (B) mindestens eine Vernetzerkomponente B in Summe mit einem Anteil von größer gleich 95 Gew.-%, vorzugsweise 97 Gew.-%, an der Gesamtzusammensetzung der Haftklebemasse K (K = ad 100 Gew.-%) vorliegen.

Erfindungsgemäß können auch mehrere Vernetzer eingesetzt werden. Wenn mehrere Vernetzer, insbesondere auch unterschiedlicher Funktionalität, verwendet werden, ist in der Definition der vorbeschriebenen Ausführungsform für das Verhältnis V anzusetzen:

$$V = n_Z/n_P,$$

wobei nz die über alle Vernetzer summierte Stoffmenge der vernetzungsaktiven Zentren ergibt:

$$n_Z = f_1 \cdot m_{V,1}/M_{V,1} + f_2 \cdot m_{V,2}/M_{V,2} \ldots$$

wobei der Index 1 die Werte des ersten Vernetzers, 2 die des zweiten Vernetzers usw. bedeutet.

Nach Kenntnis des zahlenmittleren Molekulargewichts (GPC) der Polymerprobe lässt sich die zuzusetzende Vernetzermenge gemäß der bevorzugten Ausführungsform der Haftklebemasse K bei Kenntnis des mittleren Molekulargewichts des Vernetzers und dessen Funktionalität leicht ermitteln. Sofern nur ein Vernetzer vorliegt, ergibt sich die Einwaage des vorteilhaft eingesetzten Vernetzers mv mit den eingeführten Definitionen der entsprechenden Werte aus der Einwaage der Polymerkomponente $m_P$ und deren zahlenmittlerer Molmasse $M_{n,P}$ wie folgt ($M_V$ = Molekulargewicht des Vernetzers):

$$m_V = \frac{V \cdot m_P \cdot M_V}{M_{n,P} \cdot f}$$

Liegen mehrere Vernetzer vor, insbesondere mit unterschiedlichen Funktionalitäten, so muss diese Formel entsprechend angepasst werden. Für die vernetzte Haftklebemasse ergibt sich in guter Näherung eine Vernetzungsdichte, die im Mittel 0,15 bis 0,60, vorzugsweise größer gleich 0,38 bis kleiner gleich 0,59, Vernetzungsstellen pro Makromolekül der Polymerkomponente entspricht, insbesondere wenn die Vernetzungsreaktion bis zu einem weitgehend vollständigen Umsatz durchgeführt wird.

Der mindestens eine Vernetzer ist eine kovalent vernetzende Verbindung, die mit Carboxylgruppen und Carbonsäure-Gruppen reagieren kann. Als Vernetzerkomponente B wird insbesondere vorteilhaft ein chemisch bindendes (kovalent vernetzendes) System gewählt, um eine hinreichende Temperaturbeständigkeit zu gewährleisten (in mit nicht chemisch bindenden Vernetzern, zum Beispiel Chelatvernetzern, vernetzten Massen würden die Verknüpfungsstellen bei hohen Temperaturen wieder aufgehen, so dass das System seine Kohäsionseigenschaften verlieren würde). Der Vernetzer ist also insbesondere ein solcher, welcher in der Lage ist, über die Carbonsäure-Gruppen kovalente Bindungen mit den Makromolekülen des Polyacrylats einzugehen; wobei pro Funktionalität des Vernetzermoleküls jeweils eine Verknüpfungsstelle geschaffen werden kann (ein difunktioneller Vernetzer kann somit zwei Makromoleküle über zwei Verknüpfungsstellen miteinander verbinden, ein trifunktioneller Vernetzer drei Makromoleküle über drei Verknüpfungsstellen (jeweils mittels einer Carbonsäure-Gruppe pro Makromolekül) oder zwei Makromoleküle über drei Verknüpfungsstellen (mittels einer Carbonsäure-Gruppe eines Makromoleküls und zwei Carbonsäure-Gruppen des zweiten Makromoleküls) usw.). Es hat sich als sehr vorteilhaft herausgestellt, wenn eine Vernetzungsdichte realisiert wird, die im Mittel pro Makromolekül der Polymerkomponente größer gleich 0,15 bis kleiner gleich 0,6, insbesondere größer gleich 0,22 bis kleiner gleich 0,58 Vernetzungsstellen entspricht. Hierfür ist es insbesondere vorteilhaft, wenn die Vernetzungsreaktion möglichst weitgehend in Richtung auf einen vollständigen Umsatz durchgeführt wird (bevorzugt > 90 %, mehr bevorzugt > 95 %). Mit dem vorteilhaft realisierten Vernetzungsgrad ist die Kohäsion der vernetzten Masse hoch genug, damit sie unter Biegebeanspruchung nicht spaltet, aber auch niedrig genug, dass es unter Biegebeanspruchung nicht zu einem adhäsiven Versagen der Masse kommt (Vermeidung der Übervernetzung durch geeignete Wahl der Zahl der Vernetzungsstellen).

Vorteilhaft wird der beziehungsweise werden die Vernetzer derart ausgewählt, dass sie unter normalen Lagerbedingungen, denen die unvernetzten Haftklebemassen häufig unterworfen sind, keine signifikanten Reaktionen mit Hydroxyfunktionen und/oder insbesondere mit Wasser eingehen. Hierdurch können Reaktivitätsverminderungen durch derartige Reaktionen vermieden werden, wie dies häufig bei dem Einsatz von Vernetzern wie Isocyanat der Fall ist.

Sehr geeignete Vernetzer sind solche mit drei- oder vier funktionellen Gruppen pro Vernetzermolekül (tri- und tetrafunktionale Vernetzer). Als besonders geeignete Vernetzer, die auch gut lagerfähig sind, haben sich solche chemischen Verbindungen herausgestellt, die sowohl Epoxy- als auch Amin-Gruppen in sich tragen. Besonders gut geeignete derartige Vernetzer haben beispielweise mindestens eine Amin-Gruppe und mindestens zwei Epoxy-Gruppen im Molekül, sehr effektivere Vernetzer haben beispielsweise zwei Amin-Gruppen und vier Epoxy-Gruppen. Als hervorragend geeigneter Vernetzer hat sich N,N,N',N'-Tetraglycidyl-meta-Xylenediamin (CAS No. 63738-22-7) herausgestellt. Weiterhin sehr gut geeignet ist 1,3-bis(N,N-diglycidylaminomethyl)cyclohexane (CAS No. 65992-66-7). Diese Vernetzer mit Epoxy- und Amin-Gruppen im Molekül zeichnen sich durch lange Beständigkeit (mögliche Verarbeitungszeit, "Topfzeit") der Vernetzerlösung aus, zeigen keine Reaktivitätsverminderung durch Reaktionen mit Wasser und sind dennoch durch eine hohe Vernetzungsgeschwindigkeit gekennzeichnet. Mittels dieser Vernetzer ist es weiterhin möglich, definierte Vernetzungsgrade im Zielbereich der vorliegenden Erfindung zu realisieren, ohne dass es bei Lagerung der vernetzten Produkte zu signifikanter Nachvernetzung kommt.

Um die bestmögliche Vernetzung zu gewährleisten, ist es von Vorteil, wenn außer den ausgewählten kovalent vernetzenden keine weiteren, durch andere Vernetzungsmechanismen reagierenden Vernetzer zugegen sind (wie beispielweise Chelatvernetzer). Besonders bevorzugt ist die Vernetzerkomponente Tetraglycidyl-meta-Xylenediamin.

Zusammenfassend umfasst die Polymermasse (PM) mindestens eine Polymerkomponente A und mindestens eine Vernetzerkomponente B, somit ist PM = A + B.

Die Polymerkomponente A umfasst mindestens eine Komponente A1 und mindestens eine Harzkomponente A2, somit ist A = A1 + A2.

Die Komponente A1 umfasst mindestens ein Monomer a und mindestens ein Monomer b, somit ist A1 = a + b.

Das Monomer a umfasst mindestens ein Monomer a1 und kann ferner weitere Monomer a2 und Monomer a3 umfassen, somit ist a = a1 + a2 + a3.

Herstellung der Komponente A1

Die Komponente A1 umfassend Polyacrylate lässt sich durch Polymerisation aus den beschriebenen Komponenten nach den üblichen, dem Fachmann bekannten Verfahren herstellen, insbesondere durch radikalische Polymerisation. Die Polymerisation wird bevorzugt derart durchgeführt, dass das zahlenmittlere Molekulargewicht $M_n$ des resultierenden Polymers mindestens 50.000 g/mol beträgt. Ein Wert von 250.000 g/mol für das zahlenmittlere Molekulargewicht $M_n$ sollte bevorzugt nicht überschritten werden. Sehr bevorzugt liegt das zahlenmittlere Molekulargewicht $M_n$ der Komponente A1 in einem Bereich zwischen 50.000 g/mol und 150.000 g/mol. Alle Angaben zu Molekulargewichten von Polymeren beziehen sich auf die Messung mittels Gelpermeationschromatographie; siehe hinten, Abschnitt "Messmethoden".

Ebenfalls, im Sinne der Erfindung, wird die Haftklebemasse K, wie oben beschrieben, in Form mindestens einer Schicht verwendet. Insbesondere liegt diese in Form eines flächigen Haftmittels umfassend mindestens eine Schicht vor und weist eine Schichtstärke von größer gleich 5 µm bis kleiner gleich 70 µm auf, bevorzugt größer gleich 10 µm bis kleiner gleich 60 µm, besonders bevorzugt größer gleich 10 µm bis kleiner gleich 30 µm. Die Schichtdicke beziehungsweise Schichtstärke der mindestens einen Schicht wird so gewählt, dass bei der Verwendung der Haftklebemasse K auf hoch polaren Oberflächen, insbesondere auf Oberflächen mit adsorbierten migrationsfähigen Hydroxy-Gruppe enthaltenden Verbindungen, eine ausreichende Haftung beziehungsweise Verklebung gewährleistet wird, wobei die Carbonsäure-Gruppen des mindestens einen Monomers a1, insbesondere der Acrylsäure mit einem bevorzugten Anteil von größer gleich 3 Gew.-% bis kleiner gleich 8 Gew.-% an der Komponente A1, mit den genannten Verbindungen enthaltenden mindestens eine Hydroxy-Gruppe Wasserstoffbrücken-Bindungen ausbilden.

Das flächige Haftmittel wird aus der Haftklebemasse K geformt, indem in einem nach dem Stand der Technik bekannten Verfahren die Haftklebemasse K hergestellt wird, in einem Schritt die Haftklebemasse K auf ein Substrat wie die Fertigungsstraße oder ein Flächenelement wie einen Träger, insbesondere Liner, aufgetragen wird, wobei die Haftklebemasse K zu mindestens einer Schicht mit einer Schichtstärke von größer gleich 5 µm bis kleiner gleich 70 µm aufgetragen wird, bevorzugt größer gleich 10 µm bis kleiner gleich 60 µm, besonders bevorzugt größer gleich 10 µm bis kleiner gleich 30 µm (beziehungsweise das jeweils korrespondierende Flächengewicht in [g/m$^2$]). In einem optionalen Schritt erfolgt eine Abkühlung der Haftklebemasseschicht, um anschließend ein flächiges Haftmittel der Haftklebemasse K zu gewinnen. Optional kann noch eine Schutzschicht wie ein Releaseliner auf die Haftklebemasseschicht aufgebracht werden.

Bevorzugt wird die mindestens eine Haftklebemasseschicht erfindungsgemäß in Form eines flächigen Haftmittels in einem laserbeschriftbaren mehrschichtigen Artikel umfassend Folien, Stanzlinge und Etiketten, vorzugsweise in laserbeschriftbaren und fälschungssicheren Etiketten und Folien, verwendet, wobei der Artikel mindestens die folgenden Schichten umfasst

(1) mindestens eine Gravierschicht, insbesondere umfassend einen Acrylatlack oder eine Metallschicht, mit einer bevorzugten Schichtstärke von größer gleich 1 µm bis kleiner gleich 25 µm, vorzugsweise größer gleich 2 µm, größer gleich 3 µm, größer gleich 5 µm bis kleiner gleich 20 µm, bis kleiner gleich 15 µm, besonders bevorzugt größer gleich 3 µm bis kleiner gleich 10 µm
(2) mindestens eine Kontrastschicht, welche insbesondere einen Lack, vorzugsweise einen Acrylatlack, umfasst und unter der Gravierschicht angeordnet ist und
(3) mindestens eine Klebschicht umfassend die Haftklebemasse K, angeordnet unter der Kontrastschicht.

Bevorzugt umfasst die (3) Haftklebemasseschicht das Monomer a1, bevorzugt Acrylsäure und/oder Methacrylsäure, mit einem Anteil von größer gleich 3 Gew.-% bis kleiner gleich 8 Gew.-% bezogen auf den Gesamtgehalt der Komponente A1.

Die Haftklebemasse K in einem laserbeschriftbaren mehrschichtigen Artikel verwendet, in dem zusätzlich zu den vorgenannten Schichten

(1.1) eine Stützfolie, vorzugsweise umfassend einen duroplastischen Kunststoff wie Polyester und Polyamid in Form einer Folie, auf der (1) Gravierschicht angeordnet ist, wobei die Stützträgerfolie individuell bedruckbar ist,
(1) die Gravierschicht einen vorzugsweise lösemittelfreien, strahlenhärtbaren Lack umfasst, bevorzugt einen Elektronen- und/oder UV-härtbaren Lack,
(2) die Kontrastschicht einen elektronenstrahlhärtbaren Lack umfasst, insbesondere mit einer Schichtstärke von größer gleich 20 μm bis kleiner gleich 500 μm, bevorzugt größer gleich 30 μm bis kleiner gleich 300 μm, besonders bevorzugt größer gleich 30 μm bis kleiner gleich 100 μm, wobei die Gravier- und Kontrastschicht im stärksten Kontrast zu einander stehen,
(3) die Klebschicht eine Dicke von größer gleich 7 μm bis kleiner gleich 70 μm, vorzugsweise größer gleich 10 μm bis kleiner gleich 60 μm, besonders bevorzugt größer gleich 10 μm bis kleiner gleich 30 μm aufweist und
(4) optional eine Schutzschicht, vorzugsweise ein silikonisiertes Papier, eine silikonisierte Folie oder eine Silikonfolie, auf der Klebschicht aufgebracht ist.

Bevorzugt umfasst die (3) Haftklebemasseschicht das Monomer a1, bevorzugt Acrylsäure und/oder Methacrylsäure, mit einem Anteil von größer gleich 3 Gew.-% bis kleiner gleich 8 Gew.-% bezogen auf den Gesamtgehalt der Komponente A1.

Laserbeschriftbare Artikel umfassen Erzeugnisse, insbesondere Klebebänder, Kabelwickelbänder, Schilder, Etiketten und Folien, in die durch leistungsfähige, steuerbare Laser (zum Beispiel ND:YAG-Laser oder $CO_2$-Laser) Markierungen wie Schrift, Codierungen und dergleichen eingebrannt werden. Derartige laserbeschriftbare Artikel, insbesondere Etiketten, werden besonders für eine rationelle und variable Beschriftung zur Herstellung von Schildersätzen eingesetzt. Diese Schildersätze enthalten die komplette Anzahl der Etiketten, die zum Beispiel in einem Kraftfahrzeug an kennzeichnungspflichtigen Bauteilen erforderlich sind (VIN-Schild, Schilder über Reifendruck, Treibstoffart, Kofferraumbeladung, Kenndaten auf verschiedenen Bauteilen von Kraftfahrzeugen, wie Motoren und Aggregate und anderen). Ebenfalls werden solche Etiketten und/oder Folien als Typenschilder, als Steueretiketten für Prozessabläufe sowie als Garantie- und Prüfplaketten verwendet.

Neben solchen technischen Hinweisen können laserbeschriftbare Etiketten und Folien auch Sicherheitsinformationen wie Fahrgestell- und Fahrzeugidentifikationsnummern enthalten. Entsprechende Etiketten erlauben im Falle eines Diebstahls oder Unfalls einen Rückschluss auf Fahrzeug und Fertigungsstufen bei seiner Herstellung. Der Einsatz besonderer Sicherheitsmerkmale wie Hologramme, bleibende UV-Abdrücke (foot print) auf dem Substrat, auf dem das Etikett verklebt war, und gezielte Materialauswahl der laserbeschriftbaren Etiketten dienen dazu, einerseits eine Nachahmung des Materials zu erschweren und andererseits Manipulationsversuche anzuzeigen. Solche fälschungssichere laserbeschriftbare Etiketten und Folien können sein oder sind durch eine Individualisierung beziehungsweise ein Originalitätsmerkmal, vorzugsweise auf beziehungsweise in der Gravierschicht, gekennzeichnet. Vorzugsweise sind derartige Originalitätsmerkmale nicht direkt sichtbar, sondern erfordern einen mehr oder weniger großen apparativen Aufwand, um erkannt zu werden und somit den Originalitätsnachweis zu liefern. So kann die Gravierschicht beispielsweise in ultraviolettem Licht fluoreszierende Farbstoffe enthalten, die bei Beleuchtung mit einer UV-Lampe sichtbar werden. Ein anderes Beispiel sind thermochrome Farbstoffe, die beim Erwärmen ihre Farbe ändern. Es ist auch denkbar, den Lack der Gravierschicht mit anderen nachweisbaren Substanzen zu dotieren, die einen Originalitätsnachweis liefern können, zum Beispiel mit Substanzen wie "Biocode" oder "Microtaggent". Unter der Marke "Biocode" wird von der Firma Biocode, ein System mit Agens, Marker und Rezeptor vermarktet, das einen spezifischen Nachweis bei biologischen Proben ermöglicht. "Microtaggent" ist eine Marke der Firma Microtrace Inc. für ein mehrschichtig farbiges Pigment, welches nur bei mikroskopischer Betrachtung einen kundenspezifischen Farbcode erkennen lässt. Diese Originalitätsmerkmale sind als solche bekannt und in unterschiedlichen Ausführungsformen verfügbar. Sie lassen sich zur eindeutigen Identifikation und Kennzeichnung von Produkten vielseitig einsetzen.

Bei der (1) Gravierschicht handelt es sich um eine oberhalb der (2) Kontrastschicht angeordnete Schicht, die mit Hilfe eines einzelnen Laserstrahls oder mit Hilfe mehrerer Laserstrahlen beschriftet werden kann. Bei diesem Beschriftungsvorgang wird die Gravierschicht an den Stellen zumindest teilweise ablatiert, auf die ein Laserstrahl mit entsprechender Energie gerichtet wird. Bei ausreichendem Energieeintrag wird die Gravierschicht lokal vollständig entfernt, so dass sie an diesen Stellen lichtdurchlässig ist. Es ist ebenfalls denkbar, dass die Gravierschicht an einigen Stellen lediglich teilweise ablatiert wird, so dass sich an diesen Stellen ein opakes Erscheinungsbild der Gravierschicht ergibt. Bei der Gravierschicht handelt es sich bevorzugt um eine Lackschicht, die mittels Druckverfahren aufgebracht werden kann. Bevorzugte Beispiele entsprechender Drucklackschichten umfassen Drucklacke auf Basis von elektronenstrahlhärtbaren oder UV-härtbaren Acrylatlacken wie insbesondere Polyurethanacrylat-Lacken. In einer alternativen Ausführungsform der Erfindung besteht die Gravierschicht aus einer dünnen Metallschicht. Die Gravierschicht weist bevorzugt eine Dicke von größer gleich 1 μm bis kleiner gleich 30 μm, bevorzugt größer gleich 1 μm bis kleiner gleich

20 µm, besonders bevorzugt größer gleich 1 µm bis kleiner gleich 10 µm auf. Bewegt sich die Dicke der Gravierschicht in diesem Bereich, ist die Bereitstellung einer besonders temperaturbeständigen laserbeschriftbaren Folie möglich, die gleichzeitig auch in Kombination mit der Carbonsäure-Gruppen haltigen Haftklebemasse K wasserbeständig ist. Im Vergleich zur Kontrastschicht, die bevorzugt eine Dicke von größer gleich 20 µm bis kleiner gleich 300 µm aufweist, bevorzugt größer gleich 40 µm bis kleiner gleich 200 µm, besonders bevorzugt größer gleich 60 µm bis kleiner gleich 150 µm, beträgt die Dicke der Gravierschicht bevorzugt beispielsweise 10 % der Dicke der Kontrastschicht oder weniger. Die fertige Folie weist die Gravierschicht exponiert, also oben, auf.

In einer bevorzugten Ausführungsform umfasst die (1.1) Stützfolie eine Bedruckung, wobei die Bedruckung auf der Stützträgerfolie eine Höhe von größer gleich 0,1 µm bis kleiner gleich 15 µm aufweist, vorzugsweise eine Höhe von größer gleich 1 µm bis kleiner gleich 5 µm. Insbesondere liegt die Abformung der bedruckten Stützträgerfolie als Vertiefung in der (1) Gravierschicht vor, wobei die Vertiefung eine Tiefe von größer gleich 0,1 µm bis kleiner gleich 15 µm aufweist, vorzugsweise größer gleich 1 µm bis kleiner gleich 5 µm.

Die (2) Kontrastschicht umfasst in einer bevorzugten Ausführungsform des laserbeschriftbaren wasserbeständigen mehrschichtigen Artikels eine gehärtete Acrylatlackzusammensetzung, die auf einer Zusammensetzung umfassend größer gleich 30 Gew.-% bis kleiner gleich 80 Gew.-%, bevorzugt größer gleich 50 Gew.-% bis kleiner gleich 60 Gew.-%, besonders bevorzugt größer gleich 52 Gew.-% bis kleiner gleich 58 Gew.-% eines trifunktionellen Oligomers A, größer gleich 0 Gew.-% bis kleiner gleich 20 Gew.-%, bevorzugt größer gleich 5 Gew.-% bis 15 Gew.-%, besonders bevorzugt größer gleich 8 Gew.-% bis kleiner gleich 12 Gew.-% eines trifunktionellen Monomers B, größer gleich 1 Gew.-% bis kleiner gleich 30 Gew.-%, bevorzugt größer gleich 5 Gew.-% bis kleiner gleich 15 Gew.-%, besonders bevorzugt größer gleich 8 Gew.-% bis kleiner gleich 12 Gew.-% eines difunktionellen Monomers C sowie größer gleich 2 Gew.-% bis kleiner gleich 40 Gew.-% eines farbgebenden Pigmentes basiert. Die Kontrastschicht erfindungsgemäßer laserbeschriftbarer wasserbeständiger mehrschichtiger Artikel, insbesondere Folien, kann bereitgestellt werden, indem eine Zusammensetzung, umfassend die Komponenten A, B und C sowie das farbgebende Pigment, gehärtet wird. Hierzu wird die Zusammensetzung mittels UV-Strahlung, Elektronenstrahlhärtung (im Folgenden ESH) oder thermisch vernetzt. Bevorzugt erfolgt die Vernetzung mittels ESH.

Die Kontrastschicht umfasst wenigstens ein farbgebendes Pigment. Farbgebende Pigmente im Sinne der vorliegenden Erfindung umfassen ohne Einschränkung sämtliche farbgebende Pigmente, die als Farbstoffe und/oder Aufheller in Farben und Lacken Anwendung finden. Beispiele farbgebender Pigmente sind das Titandioxid in der Rutilmodifikation ("$TiO_2$", beispielsweise Rutiltypen der Firma Kronos), Farbruße (beispielsweise Printex-Typen der Firma Evonik) oder weitere dem Fachmann bekannte farbgebende Pigmente, wie sie beispielsweise im Lehrbuch der Lacke und Beschichtungen Band 5 (Hans Kittel und Jürgen Spille, Hirzel Verlag (Stuttgart), 2003) genannt sind. Bevorzugt handelt es sich bei dem farbgebenden Pigment um möglichst witterungsstabile Pigmente. Besonders bevorzugt für die Kontrastschicht ist Titandioxid in der Rutilmodifikation. Wesentlich für die Erfindung ist nicht die Farbe des Pigmentes beziehungsweise der Kontrastschicht für sich, sondern der sich im Vergleich zur Gravierschicht ergebende Farbunterschied beziehungsweise Kontrast. Das erfindungsgemäß verwendete Pigment dient dabei der Einstellung des Kontrastes, der nach der Beschriftung der Folie, das heißt nach Ablation der Gravierschicht mittels Laser, zwischen der Kontrastschicht und der Gravierschicht erzeugt wird.

In einer weiteren Ausführungsform der vorliegenden Erfindung umfasst der laserbeschriftbare wasserbeständige mehrschichtige Artikel zusätzlich eine Zwischenschicht, welche zwischen der Gravierschicht und Kontrastschicht angeordnet ist. Die Zwischenschicht ist eine zusätzliche Lackschicht umfassend vorzugsweise einen pigmentierten elektronenstrahlhärtbaren Lack, vorzugsweise einen pigmentierten elektronenstrahlhärtbaren Polyurethanacrylatlack.

Wo erforderlich, weist der laserbeschriftbare wasserbeständige mehrschichtige Artikel eine Kompensationsschicht auf, die zwischen der Kontrastschicht und der Klebschicht angeordnet ist, um auftretende Spannungen innerhalb des Etiketts zu kompensieren, so dass ein Reißen oder Ablösen nicht auftritt. Eine solche Kompensationsschicht ist reversibel flexibel, da sie bei Temperaturen von bis zu 50 °C fest und bei höheren Temperaturen aufweicht oder aufschmilzt und in der Lage ist, auftretende Spannungen auszugleichen. Vorzugsweise besteht die Kompensationsschicht aus thermoplastischen Kunststoffen wie zum Beispiel Polyvinylacetat oder Polyamid. Weiterhin geeignet sind alle aus linearen oder thermolabil vernetzten Polymer-Molekülen bestehende Kunststoffe, zum Beispiel Polyolefine, Vinylpolymere, Polyester, Polyacetate, Polycarbonate oder auch Polyurethane und Ionomere. Daneben können als Thermoplasten für die Kompensationsschicht auch thermoplastisch verarbeitbare Kunststoffe mit ausgeprägten entropieelastischen Eigenschaften, die sogenannten thermoplastischen Elastomere Verwendung finden. Die Eigenschaften der Kompensationsschicht lassen sich durch Zusätze von Weichmachern, Füllstoffen, Stabilisatoren und anderen Additiven sowie durch Faserverstärkung breit variieren. Die Kompensationsschicht kann aus Lösung beschichtet oder als Folie zwischen Trägerschicht und Haftklebemasse eingezogen werden. Die Kompensationsschicht weist vorzugsweise eine Schichtstärke von größer gleich 0,2 µm bis kleiner gleich 20 µm auf. In einer weiteren bevorzugten Ausführungsform beträgt das Flächengewicht größer gleich 0,5 $g/m^2$ bis kleiner gleich 5 $g/m^2$. Die Kompensationsschicht ist in der Lage, die insbesondere bei hohen Temperaturen auftretenden Spannungen innerhalb des Etiketts auszugleichen, indem diese ab einem bestimmten Temperaturbereich weich wird beziehungsweise aufschmilzt. Aufgrund dieses plastischen Verhaltens werden die Spannungen innerhalb der Kompensationsschicht abgebaut. Das Etikett ist demgemäß bei hohen Temperaturen flexibel. Kühlen das Etikett beziehungsweise der Untergrund danach wieder ab, geht die Kompensationsschicht in den festen Zustand über, so dass die Verklebungsfestigkeit des Etiketts in keiner Weise beeinträchtigt ist. Das Aufschmelzen und anschließende Verfestigen der Kompensationsschicht ist nahezu beliebig oft wiederholbar.

Ein besonderer Aspekt der vorliegenden Erfindung ist, dass das flächige Haftmittel umfassend die Haftklebemasse K im Wasserstress-Test eine Wasserbeständigkeit von größer gleich 100 h, vorzugsweise größer gleich 200, 300, 400, 500, 600, 700, 800, 900 h, bei größer gleich 40 °C aufweist, vorzugsweise 45 °C, 50 °C und 55 °C; bis kleiner gleich 1000 h bei kleiner gleich 60 °C (siehe Beispiele 1, 5 und 6). Bevorzugt ist das flächige Haftmittel im Wasserstress-Test bei größer gleich 40 °C für 1000 Stunden wasserbeständig. Vorzugsweise wird maximal reversible Blasenbildung, insbesondere ohne Änderung des Materials, beobachtet.

Insbesondere zeigt das flächige Haftmittel im Sinne der vorliegenden Erfindung im Wasserstress-Test nach größer gleich 100 h bei größer gleich 40 °C bis kleiner gleich 1000 h bei kleiner gleich 60 °C maximal reversible Blasenbildung, die durch leichtes Andrücken des Haftmittels entfernbar ist (siehe Abb. 6 bis Abb. 10). Vorzugsweise wird kein Kantenabheben beobachtet und das flächige Haftmittel bleibt unbeeinträchtigt, insbesondere vollflächig, haften (siehe Abb. 8 d)). Insbesondere weist das flächige Haftmittel im Hochtemperatur-Wasserstress-Test eine gute Wasserbeständigkeit auf, wobei nach 15 Minuten bei größer gleich 80 °C bis kleiner gleich 100 °C maximal leichtes Kantenabheben und vorzugsweise leichte Blasenbildung auftritt, insbesondere reversible Blasenbildung (Beispiel 5).

In einer besonderen Ausführung der Erfindung treten nach direkter Wasserstress-Einwirkung wie im Wasserstress-Test bei 100 °C leichte Blasenbildung und/oder leichtes Kantenabheben auf. Diese sind allerdings reversibel und das flächige Haftmittel und der Artikel wie das Etikett umfassend jeweils die Haftklebemasse erhalten nach einer Rehabilitationsphase, insbesondere nach einer Rekonditionierungszeit größer gleich 15 Minuten bis kleiner gleich 72 Stunden, erneut eine vollflächige Haftung zurück (siehe Abb. 9 und Abb. 10 sowie Tabelle 3).

Bevorzugt beträgt die Rekonditionierungszeit größer gleich 15 Minuten, größer gleich 30 Minuten, größer gleich 1 Stunde, größer gleich 12 Stunden, größer gleich 24 Stunden bis kleiner gleich 48 Stunden, kleiner gleich 60 Stunden, kleiner gleich 72 Stunden.

In einer weiteren Ausführungsform der erfindungsgemäßen Haftklebemasse weist diese eine gute Wasserbeständigkeit im Hochtemperatur-Wasserstress-Test auf, wobei die Temperaturen größer gleich 70 °C bis kleiner gleich 120 °C betragen, vorzugsweise größer gleich 75 °C bis kleiner gleich 110 °C, besonders bevorzugt größer gleich 80 °C bis kleiner gleich 100 °C. Bevorzugt ist die Wasserbeständigkeit bei den vorgenannten Temperaturen so gut, dass die verklebte Haftklebemasse, insbesondere das flächige Haftmittel, und der erfindungsgemäße Artikel nur ein leichtes Kantenabheben aufweist, vorzugsweise nur eine leichte Blasenbildung, besonders bevorzugt keine Änderung des Materials auftritt (siehe Tabelle 4). Die Begriffe Wasserbeständigkeit und wasserbeständig werden synonym verwendet.

In einer besonderen Ausführungsform wird die erfindungsgemäße Haftklebemasse, insbesondere das flächige Haftmittel, in Kombination mit einem Laserfilm eingesetzt, wobei der Laserfilm eine reversible Wasserabsorption aufweist, gemessen mittels coulometrischer Karl-Fischer-Titration nach Eintauchen der Laserfilme für 3 Tage in Wasser bei 50 °C, (Beispiel 4). Die Wasserabsorption ist an einem Aufquellen des Laserfilms ersichtlich, vorzugsweise kann der Laserfilm bis zur zweifachen Menge seines Ausgangswassergehaltes Wasser aufnehmen. Bevorzugt ist die Wasserabsorption nach einer Rekonditionierungszeit von größer gleich 60 Minuten bis kleiner gleich 24 Stunden reversibel, vorzugsweise vollständig reversibel, und der Laserfilm erhält seine ursprüngliche Form und Ausgangswassergehalt zurück.

Gegenstand der vorliegenden Erfindung ist ein wasserbeständiger, laserbeschriftbarer und mehrschichtiger Artikel umfassend mindestens die folgenden Schichten

(1) mindestens eine Gravierschicht, insbesondere umfassend einen Acrylatlack oder eine Metallschicht, mit einer bevorzugten Schichtstärke von größer gleich 1 $\mu$m bis kleiner gleich 20 $\mu$m, bevorzugt größer gleich 5 $\mu$m bis kleiner gleich 15 $\mu$m,

(2) mindestens eine Kontrastschicht, welche insbesondere einen Lack, vorzugsweise einen Acrylatlack umfasst, und unter der Gravierschicht angeordnet ist und

(3) mindestens eine Klebschicht umfassend die Haftklebemasse K, angeordnet unter der Kontrastschicht, wobei die Haftklebemasse K das Vernetzungsprodukt ist aus einer Polymermasse umfassend mindestens die folgenden Komponenten

(A) mindestens eine Polymerkomponente A umfassend:

(i) größer gleich 60 Gew.-% bis kleiner gleich 80 Gew.-% bezogen auf den Gehalt der Polymerkomponente A mindestens einer Komponente A1, wobei die Komponente A1 umfasst:

(i-a) größer gleich 3 Gew.-% bis kleiner gleich 15 Gew.-%, bezogen auf den Gesamtgehalt der Komponente A1, mindestens eines Monomers a umfassend Verbindungen mit mindestens einer ethylenisch

ungesättigten Bindung, das jeweils derart gewählt ist, dass die Glasübergangstemperatur $T_G$ des entsprechenden Homopolymers aus dem jeweiligen Monomer a mindestens 0 °C beträgt,
wobei mindestens ein Teil des Gesamtanteils am Monomer a als mindestens ein Monomer a1 umfassend Verbindungen mit mindestens einer ethylenisch ungesättigten Bindung und mindestens einer Carbonsäure-Gruppe (-COOH) vorliegt, bevorzugt mit einem Anteil von größer gleich 3 Gew.-% bis kleiner gleich 8 Gew.-%, bezogen auf den Gesamtgehalt der Komponente A1, an dem mindestens einen Monomer a1 und
(i-b) größer gleich 85 Gew.-% bis kleiner gleich 97 Gew.-%, bezogen auf den Gesamtgehalt der Komponente A1, mindestens eines Monomers b ausgewählt aus der Gruppe der Acrylsäureester und/oder Methacrylsäureester, das jeweils derart gewählt ist, dass die Glasübergangstemperatur $T_G$ des entsprechenden Homopolymers aus dem jeweiligen Monomer b kleiner gleich - 30 °C beträgt,

wobei das (i-a) mindestens eine Monomer a und das (i-b) mindestens eine Monomer b in Summe mit einem Anteil von 100 Gew.-% in der Komponente A1 (A1 = ad 100 Gew.-%) vorliegen,
(ii) größer gleich 20 Gew.-% bis kleiner gleich 40 Gew.-%, bezogen auf den Gehalt der Polymerkomponente A, mindestens einer Harzkomponente A2,

wobei die (i) mindestens eine Komponente A1 und die (ii) mindestens eine Harzkomponente A2 in Summe mit einem Anteil von 100 Gew.-% in der Polymerkomponente A (A = ad 100 Gew.-%) vorliegen und
(B) mindestens einen Vernetzerkomponente B umfassend kovalent vernetzende bi- oder polyfunktionelle Verbindungen,

wobei die (A) mindestens eine Polymerkomponente A und die (B) mindestens eine Vernetzerkomponente B in Summe mit einem Anteil von größer gleich 95 Gew.-% an der Gesamtzusammensetzung der Polymermasse (PM = ad 100 Gew.-%) vorliegen.

In einer bevorzugten Ausführungsform weist der wasserbeständige, laserbeschriftbare, mehrschichtige Artikel eine Klebschicht der Haftklebemasse K auf, umfassend als Monomer a1 mindestens eine Acrylsäure und/oder Methacrylsäure mit einem Anteil von größer gleich 3 Gew.-% bis kleiner gleich 15 Gew.-%, bezogen auf den Gesamtgehalt der Komponente A1, vorzugsweise mit einem Anteil von größer gleich 3 Gew.-% bis kleiner gleich 8 Gew.-%. Besonders bevorzugt umfasst der erfindungsgemäße Artikel als Monomer a1 Acrylsäure mit einem Anteil von größer gleich 3 Gew.-% bis kleiner gleich 8 Gew.-% bezogen auf den Gesamtgehalt der Komponente A1.
In einer besonderen Ausführungsform des wasserbeständigen, laserbeschriftbaren, mehrschichtigen Artikels basiert die Kontrastschicht auf einer gehärteten Acrylatlackzusammensetzung, wie bereits oben beschrieben, umfassend

(a) größer gleich 30 Gew.-% bis kleiner gleich 80 Gew.-% eines trifunktionellen Oligomers A
(b) größer gleich 0 Gew.-% bis kleiner gleich 20 Gew.-% eines trifunktionellen Monomers B
(c) größer gleich 1 Gew.-% bis kleiner gleich 30 Gew.-% eines difunktionellen Monomers C und
(d) größer gleich 2 Gew.-% bis kleiner gleich 40 Gew.-% eines farbgebenden Pigmentes.

Das trifunktionelle Oligomer A ist ein Oligomer mit drei ungesättigten (Meth)acrylateinheiten pro Molekül, dessen zahlengemitteltes Molekulargewicht Mn bevorzugt größer gleich 1000 g/mol bis kleiner gleich 5000 g/mol, bevorzugt größer gleich 1400 g/mol bis kleiner gleich 3600 g/mol, bevorzugt größer gleich 1800 g/mol bis kleiner gleich 2200 g/mol, besonders bevorzugt größer gleich 1900 g/mol bis kleiner gleich 2100 g/mol liegt. Liegt das Molekulargewicht Mn in dem genannten Bereich, hat dies einen positiven Einfluss auf die Langzeit-Temperaturbeständigkeit der gehärteten Acrylatlackzusammensetzung, so dass besonders dimensionsstabile Kontrastschichten erhalten werden können.
In einer bevorzugten Ausführungsform ist das trifunktionelle Oligomer A ausgewählt aus der Gruppe der Polyurethantri(meth)acrylate und Polyestertri(meth)acrylate, von denen Polyurethantri(meth)acrylate besonders bevorzugt sind. Der Ausdruck (Meth)acrylat umfasst Acrylate, Methacrylate und Mischungen hiervon. Bevorzugt handelt es sich bei dem trifunktionellen Oligomer A um ein Polyurethantri(meth)acrylat, besonders bevorzugt um ein Polyurethantriacrylat. Polyurethantri(meth)acrylate sind Oligomere mit jeweils drei ungesättigten (Meth)acrylatgruppen pro Molekül sowie mehreren, das heißt mindestens zwei Urethaneinheiten. Beispiele bevorzugter Polyurethantriacrylate sind die aliphatischen Urethantriacrylate CN9260D75® und CN9278D80® der Firma Sartomer, von denen CN9260D75® besonders bevorzugt ist.
Das trifunktionelle Monomer B enthält drei ungesättigte (Meth)acrylateinheiten pro Molekül und weist in einer bevorzugten Ausführungsform der Erfindung ein Molekulargewicht von größer gleich 300 g/mol bis kleiner gleich 1000 g/mol, bevorzugt 350 g/mol bis kleiner gleich 800 g/mol, bevorzugt größer gleich 350 g/mol bis kleiner gleich 600 g/mol, besonders bevorzugt größer gleich 400 bis 450 g/mol auf. Komponente B wird bevorzugt ausgewählt aus der Gruppe

bestehend aus propoxylierten und ethoxylierten Glyceroltri(meth)acrylaten und propoxylierten und ethoxylierten Trimethylolpropanetri(meth)acrylaten der allgemeinen Formel (I) oder Mischungen hieraus:

Formel I

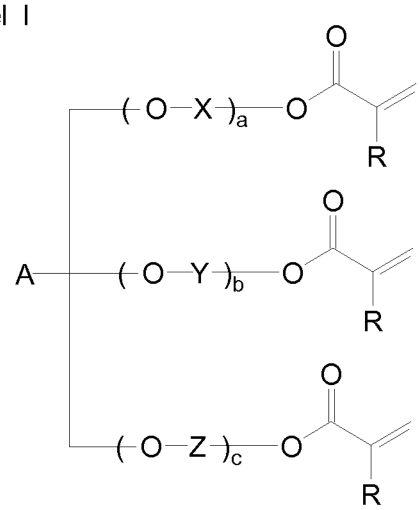

wobei R in Formel I Wasserstoff oder eine Methylgruppe darstellt; A Wasserstoff oder eine Ethylgruppe ist; X, Y und Z jeweils unabhängig voneinander eine Propylen- oder Ethylen-Einheit darstellen; und a, b und c jeweils unabhängig voneinander eine ganze Zahl von 1 bis 4, bevorzugt 1 bis 3 sind, und a+b+c eine Zahl zwischen 3 und 12, bevorzugt von 3 bis 9 darstellt. In einer besonders bevorzugten Ausführungsform der Erfindung sind X, Y und Z Propyleneinheiten. Besonders bevorzugt ist das trifunktionelle Monomer ein propoxyliertes Glyceroltriacrylat. Wird das trifunktionelle Monomer B so ausgewählt, dass das Molekulargewicht in die oben genannten Bereiche und/oder dass das Monomer B unter die oben genannte Formel I fällt, so übt auch die Komponente B einen positiven Einfluss auf die Temperaturbeständigkeit der Kontrastschicht und somit der laserbeschriftbaren Folie aus.

Das difunktionelle Monomer C ist ein Monomer mit zwei ungesättigten Acrylateinheiten pro Molekül. Komponente C weist bevorzugt ein Molekulargewicht von größer gleich 100 g/mol bis kleiner gleich 1000 g/mol, bevorzugt größer gleich 180 g/mol bis kleiner gleich 350 g/mol, besonders bevorzugt größer gleich 220 g/mol bis kleiner gleich 280 g/mol auf und ist bevorzugt ausgewählt aus der Gruppe der Ethylenglykoldiacrylate der allgemeinen Formel (II):

Formel II

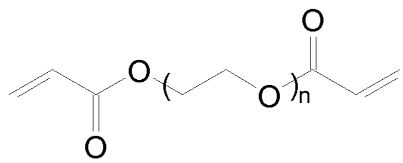

und der Propylenglykoldiacrylate der allgemeinen Formel (III):

Formel III

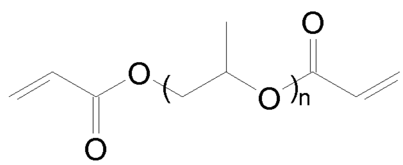

oder Mischungen hieraus, wobei n in den Formeln II und III jeweils unabhängig voneinander eine ganze Zahl von 1 bis 15, bevorzugt von 1 bis 9, besonders bevorzugt von 2 bis 6 und ganz besonders bevorzugt 3 oder 4 darstellen. In einer besonders bevorzugten Ausführungsform der vorliegenden Erfindung ist das difunktionelle Monomer C Triethylenglykoldiacrylat. Wird das difunktionelle Monomer C so ausgewählt, dass das Molekulargewicht in die oben genannten Bereiche und/oder dass das Monomer C unter die oben genannte Formel II oder III fällt, so übt auch die Komponente C einen positiven Einfluss auf die Temperaturbeständigkeit der Kontrastschicht und somit der laserbeschriftbaren Folie

aus.

In einer besonders bevorzugten Ausführungsform der Erfindung basiert die Kontrastschicht im laserbeschriftbaren, wasserbeständigen und mehrschichtigen Artikel auf einer Zusammensetzung umfassend wenigstens ein Polyurethantriacrylat, bevorzugt CN9260D75® oder CN9278D80® der Firma Sartomer als Komponente A, ein propoxyliertes Glyceroltriacrylat der oben wiedergegebenen Formel I als Komponente B, Triethylenglykoldiacrylat als Komponente C sowie ein Pigment, beispielsweise Titandioxid in der Rutilmodifikation.

Bevorzugt liegt der wasserbeständige, laserbeschriftbare, mehrschichtiger Artikel in Form eines Etiketts, einer Folie und/oder eines Stanzlings vor und ist vorzugsweise gleichzeitig fälschungssicher, insbesondere durch Individualisierungen, wie bereits oben beschrieben.

In einer bevorzugten Ausführungsform weist der laserbeschriftbare, wasserbeständige und mehrschichtige Artikel, insbesondere das erfindungsgemäße Haftmittel und weiter insbesondere die erfindungsgemäße Haftklebemasse K, eine Hitzeresistenz von größer 200 Stunden bis kleiner gleich 2500 Stunden bei größer gleich 80 °C bis kleiner gleich 150 °C, vorzugsweise größer gleich 300 Stunden bis kleiner gleich 2300 Stunden, größer gleich 500 Stunden bis kleiner gleich 2500 Stunden. Besonders bevorzugt eine Hitzeresistenz von größer gleich 500 Stunden bis kleiner 1000 Stunden bei 80 °C und größer gleich 500 Stunden bis kleiner 2300 Stunden bei 150 °C. Die Hitzebeständigkeit zeigt sich insbesondere an der geringen bis keinen Deformation oder keinem Reißen des Artikels, maximal weist der Artikel Knitterfalten auf, vorzugsweise ist der Barcode des Artikels lesbar.

In einer bevorzugten Ausführungsform weist der laserbeschriftbare, wasserbeständige und mehrschichtige Artikel, insbesondere das erfindungsgemäße Haftmittel und weiter insbesondere die erfindungsgemäße Haftklebemasse K, ferner eine Beständigkeit gegen die Einwirkung von Flüssigkeiten auf für größer gleich 24 Stunden bei Raumtemperatur gegenüber größer gleich 2,5 %- und kleiner gleich 5 %-igen $H_2SO_4$, sowie gegenüber Glasreinigungsmitteln, 1 %-igen Natronlauge, Benzin, Toluol, Motoren-/Maschinenöl, Dieselkraftstoffen und anderen im Automobilbereich üblichen Flüssigkeiten. Bevorzugt liegt die vorbeschriebene Beständigkeit vor bei Temperaturen von größer gleich 20 °C bis kleiner gleich 50 °C und für größer gleich 15 Minuten bis kleiner gleich 24 Stunden, vorzugsweise für größer gleich 30 Minuten bis kleiner gleich 12 Stunden.

In einer bevorzugten Ausführungsform weist der laserbeschriftbare, wasserbeständige und mehrschichtige Artikel, insbesondere das erfindungsgemäße Haftmittel und weiter insbesondere die erfindungsgemäße Haftklebemasse K, ebenfalls eine hervorragende Abriebbeständigkeit auf. Insbesondere weist der erfindungsgemäße Artikel im Abrieb-Test mit 200 g Gewicht und 200 Wiederholungen einer Vor- und Rückreibung keine Änderung des Materials auf, vorzugsweise ist der Barcode lesbar.

In einer bevorzugten Ausführung erfüllt der erfindungsgemäßen laserbeschriftbaren Artikel umfassend das beschriebene flächige Haftmittel enthaltend die Haftklebemasse K, die Anforderungen des deutschen Kraftfahrtbundesamtes an "Fabrikschilder" gemäß des Merkblattes für die Prüfung von Fabrikschildern aus Platten, Blechen und Folien sowie deren Befestigung durch Kleben, Stand Juli 2007.

Der erfindungsgemäße Artikel weist eine gute Wasserbeständigkeit im Hochtemperatur-Wasserstress-Test bei 100 °C für 15 Minuten auf, wobei der Artikel maximal ein leichtes Kantenabheben, vorzugsweise eine leichte und reversible Blasenbildung aufweist. Bevorzugt weist der erfindungsgemäße Artikel eine Haftkraft auf, gemessen als Schälkraft gemäß ISO 29862 (Methode 1, Abzugsgeschwindigkeit von 300 mm/min) größer gleich 5 N/cm bei 23 °C, insbesondere größer gleich 5 N/cm bei kleiner gleich 40 °C, vorzugsweise größer gleich 4 N/cm bei 70 °C und größer gleich 3 N/cm bei 100 °C.

In der erfindungsgemäßen Verwendung des wasserbeständigen laserbeschriftbaren und mehrschichtigen Artikels umfassend Etiketten, Folien, Klebebänder und Stanzlinge, weist dieser Artikel im Wasserstress-Test eine Wasserbeständigkeit von größer gleich 100 h bei 40 °C auf, insbesondere bis zu größer gleich 1000 Stunden, vorzugsweise größer gleich 200, 300, 400, 500, 600, 700, 800, 900 Stunden, vorzugsweise bei größer gleich 45 °C, 50 °C und 55 °C bis kleiner gleich 60 °C und/oder im Hochtemperatur-Wasserstress-Test eine Wasserbeständigkeit von größer gleich 15 Minuten bei größer gleich 80 °C bis kleiner gleich 100 °C.

Bevorzugt zeigt sich die gute Beständigkeit im Wasserstress-Test bei größer gleich 100 h bei größer gleich 40 °C bis kleiner gleich 1000 h, insbesondere bei kleiner gleich 60 °C, mit einer maximal reversiblen Blasenbildung, die durch leichtes Andrücken entfernbar ist. Vorzugsweise ist im Wasserstress-Test im wasserbeständigen laserbeschriftbaren und mehrschichtigen Artikel im Sinne der Erfindung kein Kantenabheben sichtbar (siehe Beispiele 1, Tabelle 1; Beispiel 5, Tabelle 5; Beispiel 6 und Abb. 6 bis 10).

In einer besonderen Ausführung der Erfindung treten nach direkter Wasserstress-Einwirkung, wie im Wasserstress-Test, leichte Blasenbildung und/oder leichtes Kantenabheben auf, die aber nach einer Rehabilitationsphase reversibel sind. Der vorbeschriebene Artikel enthaltend die Haftklebemasse erhält nach einer Rehabilitationsphase, insbesondere nach einer Rekonditionierungszeit, größer gleich 15 Minuten bis kleiner gleich 72 Stunden, erneut eine vollflächige Haftung zurück (siehe Abb. 9 und Abb. 10 sowie Tabelle 3).

Bevorzugt beträgt die Rekonditionierungszeit größer gleich 15 Minuten, größer gleich 30 Minuten, größer gleich 1 Stunde, größer gleich 12 Stunden, größer gleich 24 Stunden bis kleiner gleich 48 Stunden, kleiner gleich 60 Stunden,

kleiner gleich 72 Stunden.

In einer weiteren Ausführungsform des erfindungsgemäßen Artikels weist dieser eine gute Wasserbeständigkeit im Hochtemperatur-Wasserstress-Test auf, wobei die Temperaturen größer gleich 70 °C bis kleiner gleich 120 °C betragen, vorzugsweise größer gleich 75 °C bis kleiner gleich 110 °C, besonders bevorzugt größer gleich 80 °C bis kleiner gleich 100 °C. Bevorzugt ist die Wasserbeständigkeit bei den vorgenannten Temperaturen so gut, dass der verklebte erfindungsgemäße Artikel nur ein leichtes Kantenabheben aufweist, vorzugsweise nur eine leichte Blasenbildung, besonders bevorzugt keine Änderung des Materials auftritt (siehe Tabelle 4).

Erfindungsgemäße wasserbeständige, laserbeschriftbare und mehrschichtige Artikel können auf verschiedene Arten hergestellt werden. In einer Ausführungsform betrifft die vorliegende Erfindung ein Verfahren zur Herstellung eines wasserbeständigen mehrschichtigen Artikels, insbesondere laserbeschriftbar und vorzugswiese zusätzlich fälschungssicher, sowie einen Artikel erhältlich nach diesem Verfahren, umfassend die folgenden Schritte:

1) Optional Bereitstellen einer Stützfolie;
2) Aufbringen einer Gravierschicht, insbesondere Lack- oder Metallschicht, auf die Stützfolie;
3) Aufbringen einer Zusammensetzung zur Herstellung einer Kontrastschicht, insbesondere eine Acrylatlackzusammensetzung, auf die Gravierschicht,
4) Härten der Zusammensetzung aus Schritt 3), um eine Kontrastschicht zu erhalten;
5) Aufbringen einer Haftklebemasse K auf die Kontrastschicht sowie das Bedecken der Haftklebemasse K mit einem Schutzpapier oder Release-Liner, wobei die Haftklebemasse K das Vernetzungsprodukt ist aus einer Polymermasse umfassend mindestens die folgenden Komponenten

    (A) mindestens eine Polymerkomponente A umfassend

        (i) größer gleich 60 Gew.-% bis kleiner gleich 80 Gew.-% bezogen auf den Gehalt der Polymerkomponente A mindestens einer Komponente A1, wobei die Komponente A1 umfasst

            (i-a) größer gleich 3 Gew.-% bis kleiner gleich 15 Gew.-%, bezogen auf den Gesamtgehalt der Komponente A1, mindestens eines Monomers a umfassend Verbindungen mit mindestens einer ethylenisch ungesättigten Bindung, das jeweils derart gewählt ist, dass die Glasübergangstemperatur TG des entsprechenden Homopolymers aus dem jeweiligen Monomer a mindestens 0 °C beträgt,
            wobei mindestens ein Teil des Gesamtanteils am Monomer a als mindestens ein Monomer a1 umfassend Verbindungen mit mindestens einer ethylenisch ungesättigten Bindung und mindestens einer Carbonsäure-Gruppe vorliegt, bevorzugt mit einem Anteil von größer gleich 3 Gew.-% bis kleiner gleich 8 Gew.-%, bezogen auf den Gesamtgehalt der Komponente A1, an dem mindestens einen Monomer a1 und
            (i-b) größer gleich 85 Gew.-% bis kleiner gleich 97 Gew.-%, bezogen auf den Gesamtgehalt der Komponente A1, mindestens eines Monomers b ausgewählt aus der Gruppe der Acrylsäureester und/oder Methacrylsäureester, das jeweils derart gewählt ist, dass die Glasübergangstemperatur TG des entsprechenden Homopolymers aus dem jeweiligen Monomer b kleiner gleich - 30 °C beträgt,

        wobei das (i-a) mindestens eine Monomer a und das (i-b) mindestens eine Monomer b in Summe mit einem Anteil von 100 Gew.-% in der Komponente A1 (A1 = ad 100 Gew.-%) vorliegen,
        (ii) größer gleich 20 Gew.-% bis kleiner gleich 40 Gew.-%, bezogen auf den Gehalt der Polymerkomponente A, mindestens einer Harzkomponente A2,

    wobei die (i) mindestens eine Komponente A1 und die (ii) mindestens eine Harzkomponente A2 in Summe mit einem Anteil von 100 Gew.-% in der Polymerkomponente A (A = ad 100 Gew.-%) vorliegen und
    (B) mindestens einen Vernetzerkomponente B umfassend kovalent vernetzende bi- oder polyfunktionelle Verbindungen,

wobei die (A) mindestens eine Polymerkomponente A und die (B) mindestens eine Vernetzerkomponente B in Summe mit einem Anteil von größer gleich 95 Gew.-% an der Gesamtzusammensetzung der Polymermasse (PM = ad 100 Gew.-%) vorliegen,
6) und das Entfernen der Stützfolie.

In diesem Verfahren können als Stützfolie, die auch als Prozessliner bezeichnet werden, herkömmliche Folien auf Basis unterschiedlicher Materialien, wie Polyethylenterephthalat (PET), verwendet werden. Das Aufbringen von sowohl der Gravierschicht auf die Stützfolie als auch von der Acrylatlackzusammensetzung auf die Gravierschicht kann

mittels herkömmlicher Druck- und Beschichtungsverfahren erfolgen. In einer bevorzugten Ausführungsform der Erfindung wird die Acrylatlackzusammensetzung mittels Kommarakel aufgetragen.

In einer bevorzugten Ausführungsform des Verfahrens zur Herstellung eines erfindungsgemäßen wasserbeständigen mehrschichtigen Artikels wird in Schritt 3) des Verfahrens eine Zusammensetzung umfassend

(a) größer gleich 30 Gew.-% bis kleiner gleich 80 Gew.-% eines trifunktionellen Oligomers A,
(b) größer gleich 0 Gew.-% bis kleiner gleich 20 Gew.-% eines trifunktionellen Monomers B,
(c) größer gleich 1 Gew.-% bis kleiner gleich 30 Gew.-% eines difunktionellen Monomers C und
(d) größer gleich 2 Gew.-% bis kleiner gleich 40 Gew.-% eines farbgebenden Pigmentes
aufgebracht.

Optional wird im Verfahren zur Herstellung eines erfindungsgemäßen wasserbeständigen mehrschichtigen Artikels die Zwischenschicht nach dem Aufbringen der Gravierschicht und vor dem Aufbringen der Kontrastschicht aufgebracht, die vorzugsweise einen pigmentierten elektronenstrahlhärtbaren Lack aufweist und/oder die Kompensationsschicht nach dem Aufbringen der Kontrastschicht und vor dem Aufbringen der Klebschicht aufgebracht, die vorzugsweise ein thermoplastisches Polymer umfasst.

Die Erfindung wird anhand nachfolgend dargestellter und beschriebener Ausführungsbeispiele näher erläutert. Die Beispiele sollen die Erfindung skizzieren, ohne die Erfindung auf die in den Beispielen genannten Werte zu beschränken.

Die Abbildungen zeigen:

Abb. 1, Abb. 2, Abb. 3 und Abb. 4 den Aufbau eines erfindungsgemäßen Artikels.
Abb. 5: den Versuchsaufbau des Wasserstress-Tests.
Abb. 6a) und 6b), Abb. 7a) und 7b), Abb. 8a) bis 8d) die photographische Dokumentation von Testklebebändern im Wasserstress-Test, jeweils verklebt auf einer Testoberfläche aus ASTM-Stahl.
Abb. 9a) und 9b) sowie Abb. 10a) und 10b) die photographische Dokumentation von Testklebebändern im Hochtemperatur-Wasserstress-Test, jeweils verklebt auf einer Testoberfläche aus ASTM-Stahl.

**Bezugszeichen**

0 bezeichnet den allgemeinen Aufbau eines Etiketts im Sinne der Erfindung, 1.1, 1.2, 1.3 und 1.4, bezeichnen jeweils eine erfindungsgemäße Gravierschicht, 2.1, 2.2, 2.3 und 2.4 bezeichnen jeweils die erfindungsgemäße Klebschicht, 3.1, 3.2, 3.3 und 3.4 bezeichnen jeweils die erfindungsgemäße Kontrastschicht und 4.2, 4.3 und 4.4 bezeichnen jeweils eine Schutzschicht. 5 bezeichnet Testklebebänder, 6 Testoberflächen, 7 Probenbehälter, 8 destilliertes Wasser, 9 Temperatursensor, 10 Thermometer und 20 Ofen.

Beschreibung der Abbildungen

Die Abbildungen zeigen allgemeine und bevorzugte Ausführungsformen eines wasserbeständigen, mehrschichtigen, laserbeschriftbaren Artikels, insbesondere eines solchen Etiketts, das zur Verklebung auf feuchten und/oder nassen Oberflächen verwendet wird.

Abbildung 1 zeigt einen Aufbau eines erfindungsgemäßen Artikels, bevorzugt eines Etiketts, mit einer nach außen exponierten Gravierschicht 1.1, vorzugsweise umfassend einen Acrylatlack oder eine Metallschicht; die erfindungsgemäße Haftklebemasse K in Form einer Klebschicht 2.1 und eine Kontrastschicht 3.1 angeordnet zwischen der Gravierschicht 1.1 und Klebschicht 2.1.

Abbildung 2 zeigt einen Aufbau eines erfindungsgemäßen Artikels, bevorzugt eines solchen Etiketts, mit einer nach außen exponierten Gravierschicht 1.2, vorzugsweise umfassend einen Acrylatlack oder eine Metallschicht; eine Klebschicht 2.2 umfassend die erfindungsgemäße Haftklebemasse K, enthaltend als Monomer a1 mindestens eine Acrylsäure und/oder Methacrylsäure mit einem Anteil von größer gleich 3 Gew.-% bis kleiner gleich 8 Gew.-% bezogen auf den Anteil der Komponente A1, eine Kontrastschicht 3.2 angeordnet zwischen der Gravierschicht 1.2 und Klebschicht 2.2, umfassend einen elektronenstrahlhärtbaren Lack und ein Schutzschicht 4.2 angeordnet auf der Klebschicht 2.2..

Abbildung 3 zeigt einen Aufbau eines erfindungsgemäßen Artikels, bevorzugt eines solchen Etiketts, mit einer nach außen exponierten Gravierschicht 1.3, vorzugsweise umfassend einen Acrylatlack oder eine Metallschicht; eine Klebschicht 2.3 umfassend die erfindungsgemäße Haftklebemasse K, enthaltend als Monomer a1 mindestens eine Acrylsäure mit einem Anteil von größer gleich 3 Gew.-% bis kleiner gleich 8 Gew.-% bezogen auf den Anteil der Komponente A1, eine Kontrastschicht 3.3 angeordnet zwischen der Gravierschicht 1.3 und Klebschicht 2.3, umfassend einen elektronenstrahlhärtbaren Lack und ein Schutzschicht 4.3 angeordnet auf der Klebschicht 2.3.

Abbildung 4 zeigt einen Aufbau eines erfindungsgemäßen Artikels, bevorzugt eines solchen Etiketts, mit einer

nach außen exponierten Gravierschicht 1.4, vorzugsweise umfassend einen Acrylatlack oder eine Metallschicht; eine Klebschicht 2.4 umfassend die erfindungsgemäße Haftklebemasse K, enthaltend als Monomer a1 mindestens eine Acrylsäure mit einem Anteil von größer gleich 3 Gew.-% bis kleiner gleich 5 Gew.-% bezogen auf den Anteil der Komponente A1, eine Kontrastschicht 3.4 angeordnet zwischen der Gravierschicht 1.4 und Klebschicht 2.4, umfassend einen elektronenstrahlhärtbaren Lack und ein Schutzschicht 4.4 angeordnet auf der Klebschicht 2.4.

**Ausführungsbeispiele**

Die Messungen werden (sofern nichts anderes angegeben ist) bei einem Prüfklima von 23 ± 1 °C und 50 ± 5 % rel. Luftfeuchte durchgeführt.

**Messmethoden / Angaben bezüglich genannter Parameterwerte**

Bestimmung des mittleren Molekulargewichts des unvernetzten Polyacrylats (Polymerisationsprodukt)

Die Angaben des gewichtsmittleren Molekulargewichts $M_w$, der zahlenmittleren Molmasse $M_N$ und der Polydisperistät $P_D$ in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm, $10^3$ Å, 8,0 mm x 50 mm (Angaben hier und im Folgenden in der Reihenfolge: Typ, Partikelgröße, Porosität, Innendurchmesser x Länge; 1 Å = $10^{-10}$ m) verwendet. Zur Auftrennung wird eine Kombination der Säulen des Typs PSS-SDV, 5 µm, $10^3$ Å sowie $10^5$ Å und $10^6$ Å mit jeweils 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung).

Erweichungspunkt $T_E$

Die Bestimmung des Erweichungspunktes $T_E$ von Harzen erfolgt mittels des Ring-Kugel-Verfahrens durch entsprechende Anwendung der Bestimmungen der DIN EN 1427:2007 (Untersuchung der Harzprobe statt Bitumens bei ansonsten beibehaltener Verfahrensführung). Die Messungen erfolgen im Glycerolbad. Die Angaben zum Erweichungspunkt beziehen sich auf die Ergebnisse dieser Messung.

Glasübergangstemperaturen $T_G$

Glasübergangstemperaturen $T_G$ der Harze wurden durch dynamisch mechanische Analyse (DMA) bestimmt; dabei wurden folgende Verfahrensführungen gewählt: Glasübergangstemperaturen wurden mittels Temperatursweep ermittelt. Alle Angaben im Rahmen dieser Schrift beziehen sich auf die Ergebnisse dieser Messungen, sofern im Einzelnen nichts anderes angegeben ist. Bei der DMA wird davon Gebrauch gemacht, dass die Eigenschaften von viskoelastischen Materialien sich bei einer sinusförmigen mechanischen Beanspruchung von der Frequenz der Beanspruchung (also der Zeit) als auch von der Temperatur abhängen.

Alle DMA-Verfahrensführungen:

Messgerät: Rheometric Scientific RDA III; Messkopf: federgelagert mit Normalkraft; Temperierung: Heizkammer; Messgeometrie: parallele-Platten-Anordnung, Probendicke 1 (± 0,1) mm; Probendurchmesser 25 mm (zur Herstellung einer 1 mm dicken Probe wurden 5 Schichten (jeweils 200 µm) des zu untersuchenden Klebebandes aufeinander laminiert; da der PET-Träger zu den rheologischen Eigenschaften nicht maßgeblich beiträgt, kann seine Anwesenheit vernachlässigt werden).

Wasserstress-Test (siehe Abb. 5)

Der Wasserstress-Test beziehungsweise die Beständigkeit der Testklebebänder gegen Wasser wurden in einem temperierbaren Ofen 20 bei einer Temperatur von 40 °C und bei erhöhter Temperatur von 60 °C durchgeführt (siehe Abb. 5). Im Innenraum des Ofens befindet sich ein mit einem Deckel (nicht gezeigt) abdeckbarer Probenbehälter 7, der mit destilliertem Wasser 8 gefüllt ist. Das Volumen des Wassers ist so gewählt, sodass die Testklebebänder 5 über die Dauer des Tests vollständig mit destilliertem Wasser bedeckt sind. Über die Dauer des Tests ist der Probenbehälter abgedeckt, um die Verdampfung des Wassers zu minimieren.

Zur Überprüfung und Steuerung der Temperatur von 40 °C und 60 °C dient ein Temperatursensor 9 mit Thermometer 10, wobei der Sensor im Wasser eingebracht ist. Die Temperatur kann außerhalb des Ofens abgelesen werden.

Die Testklebebänder 5 wurden auf ASTM-Stahl-Testoberflächen 6 geklebt. Nach Aufbringen der Testklebebänder 5 auf die Testoberflächen 6 erfolgte eine Benetzung des Untergrundes mit dem Adhäsiv für eine Verklebungszeit von 1 h, 24 h und 72 h, wobei h für Stunden steht. Danach wurden die Testoberflächen hochkant, leicht geneigt, in den mit Wasser 8 gefüllten Probenbehälter 7 aufgestellt, wobei sie vollständig mit Wasser 8 bedeckt waren. Das Aufstellen der Testoberflächen 6 mit den verklebten Testklebebändern 5 kann in eine dafür vorgesehen Vorrichtung (nicht gezeigt) erfolgen, um das Umkippen und den Kontakt zwischen den Testoberflächen 6 zueinander zu verhindern.

Der Test erfolgte (Abb. 5) für eine Dauer von 500 h oder 1000 h jeweils bei 40 °C und bei 60 °C. Anschließend erfolgte die optische beziehungsweise visuelle Beurteilung und Bewertung gemäß der nachfolgenden Klassifizierung:

| | |
|---|---|
| **--** | = vollständiges Ablösen, größer 50 % der Fläche |
| **-** | = schweres Kantenabheben, größer 10 % der Fläche |
| **0** | = leichtes Kantenanheben, reversibel |
| **+** | = einzelne Blasen, reversibel, durch Andrücken entfernbar |
| **++** | = keine Änderung des Materials |

Die Bewertung erfolgte nach der Entnahme der Testoberflächen aus dem beschriebenen Aufbau (Abb. 5) und nach einer Rekonditionierungszeit von 20 Minuten bei Raumtemperatur der in Abb. 6 bis Abb. 8 gezeigten Testklebebänder.

Hochtemperatur-Wasserstress-Test

Die Verklebungszeit der Testklebebänder auf dem Untergrund (ASTM-Stahlplatten) betrug 1 h, 24 h und 72 h. Anschließend wurden die Testklebebänder bei Wasser-Temperaturen von 80 °C, 90 °C und 100 °C für 15 Minuten gelagert, wobei die Testklebebänder vollständig mit Wasser bedeckt waren. Die Bewertung erfolgte nach derselben Klassifizierung, wie oben beschrieben, sofort nach Entnahme aus dem Wasser und nach einer Rekonditionierungszeit von 24 h. Die Ergebnisse sind in Tabelle 4 dargestellt.

Bestimmung der Kohäsion/Weichheit anhand des Mikro-Scherhaftungsversuchs:

Dieser Versuch ist ein schneller Test zur Beurteilung der Kohäsion oder Weichheit eines Adhäsivs, insbesondere einer Haftklebemasse und wird in μm angegeben. Je höher der Wert [μm], umso weicher ist das Adhäsiv, insbesondere die Haftklebemasse.

Ein 1 cm breiter Streifen des Klebebandes wird auf einem polierten Stahlplättchen (Prüfuntergrund) auf einer Länge von 5 cm mit einer 2 kg-Rolle durch zehnmaliges Überrollen verklebt. Der Teststreifen wird mit einer 190 μm dicken PET-Folie verstärkt und anschließend kantengerade mit Hilfe einer Fixiervorrichtung abge¬schnitten. Dabei steht die Kante des verstärkten Teststreifens 1 mm über der Kante des Stahlplättchens. Die Plättchen werden für 15 min unter Testbedingungen (23 °C, 50% relative Luftfeuchte) im Messgerät aber ohne Last equilibriert. Anschließend wird das gewünschte Testgewicht (hier 50 g) angehängt, so dass eine Scherbe¬anspruchung parallel zur Verklebungsfläche entsteht. Mittels eines Wegaufnehmers mit einer Auflösung im μm-Bereich wird in Abhängigkeit der Zeit der Scherweg graphisch aufgenommen.

Als Mikroscherweg μS1 wird der Scherweg (Scherstrecke) nach einer Gewichtsbelastung definierter Dauer (hier: 10 min) angegeben.

Bestimmung der Haftkraft anhand der Schälfestigkeit gemäß ISO 29862:2007

Die Haftkraft eines Adhäsivs, insbesondere einer Haftklebemasse, wurde bestimmt als Schälfestigkeit mit einer Schälgeschwindigkeit von 300 mm/min, die in einem Winkel von 180° zum verklebten Testklebeband auf dem Stahlsubstrat ausgeübt worden ist.

Zur Messung der Klebkräfte wurden 19 mm breite Prüfstreifen blasenfrei auf eine fein geschliffene (Schmirgelpapier mit FEPA-Körnung 240) Stahlplatte aus rostfreiem Stahl geklebt und mit einer gummiumwickelten 2-kg-Rolle mit einer Geschwindigkeit von 10 m/min angedrückt. Die Stahlplatte und das überstehende Ende des Klebebandes wurden dann in der Weise in die Enden einer Zugprüfmaschine gespannt, dass ein Abzugswinkel von 180° entstand. Das Klebeband wurde mit einer Geschwindigkeit von 300 mm/min von der Stahlplatte abgezogen. Die Angabe der Klebkraft erfolgt in N/cm

Die Haftkraft in N/cm der unterschiedlichen Testklebebänder wurde auf ASTM-Stahlplatten bestimmt

a) temperaturabhängig (Tabelle 2a) bei 23 °C, 40 °C, 70 °C und 100 °C nach einer Verklebungszeit von 72 h und
b) abhängig von der Verklebungszeit (Tabelle 2b) von 0 Minuten (Bestimmung direkt nach Aufbringen des Testklebebandes auf dem Untergrund), 20 Minuten, 1 h, 24 h und 72 h bei Raumtemperatur. Die nach b) bestimmten N/cm-Werte wurden zusätzlich in % ausgedrückt, wobei der Wert nach 72 h gleich 100 % definiert worden ist (Tabelle 2c).

Bestimmung der Wasserabsorption der Laserfilme

Die Wasserabsorption wurde mittels coulometrischer Karl-Fischer-Titration bestimmt. Die Proben wurden für 72 h bei 50 °C Wassertemperatur gelagert, wobei die Proben mit dem Wasser vollständig bedeckt waren. Die Messung der Wasserabsorption erfolgte nach Entnahme der Proben aus dem Wasser und einer Rekonditionierungszeit von 1 h oder 24 h. Die Ergebnisse werden in % angegeben (Tabelle 3).

**Beispiel 1: Zusammensetzung erfindungsgemäßer Haftklebemassen**

Es wurden Testklebebänder der Zusammensetzungen, wie in Tabelle 1 gezeigt, hergestellt und im Wasserstress-Test getestet. Die Ergebnisse des Wasserstress-Tests sind in Tabelle 1 gezeigt.

**Tabelle 1a: Zusammensetzung von Haftklebemassen**

| | Komponente | | Einheit | Referenz I | Referenz II | Klebemasse I | Klebemasse II | Klebemasse III |
|---|---|---|---|---|---|---|---|---|
| Acrylsäure | a1 | A1 | Gew.-% | 1 | 1 | 3 | 5 | 3 |
| Butylacrylat | b | | Gew.-% | 48,5 | 49,5 | 43,5 | 47,5 | 48,5 |
| Ethylhexylacrylat | b | | Gew.-% | 48,5 | 49,5 | 43,5 | 47,5 | 48,5 |
| Glycidylmethacrylat | b | | Gew.-% | 2 | - | - | - | - |
| Methylacrylat | b | | Gew.-% | - | - | 10 | - | - |
| Harz (Terpenphenol-) | A2 | | Gew.-% Auf Poly fest | 20-40 | 20-40 | 20-40 | 20-40 | 20-40 |
| | | | | | | | | |
| Vernetzer I (Erisys GA 240) | B | | Gew.-Teile Auf Poly fest | - | 0,025 - 0,075 | 0,025 - 0,075 | 0,025 - 0,075 | 0,025 - 0,075 |
| Vernetzer II (Al-Chelat) | B | | Gew.-Teile Auf Poly fest | - | Oder 0,1 - 0,2 | Oder 0,1 - 0,2 | Oder 0,1 - 0,2 | Oder 0,1 - 0,2 |
| Vernetzer III | B | | Gew.-Teile Auf Poly fest | 0,3 ZnCl + 0,15 Desm. L75 | - | - | - | - |
| Wasser beständigkeit 1000 h bei 40 °C | - | | Visuelle Bewertung | ○ | ○ | ++ | ++ | ++ |
| Wasser bestandigkeit 1000 h bei 60 °C | - | | Visuelle Bewertung | -- | -- | ○ | ++ | ○ |

**--** = vollständiges Ablösen, größer 50 % der Fläche; **-** = schweres Kantenabheben, größer 10 % der Fläche; **0** = leichtes Kantenanheben, reversibel; **+** = einzelne Blasen, reversibel, durch Andrücken entfernbar; **++** = keine Änderung des Materials

**Beispiel 2: Untersuchte Adhäsive, insbesondere Haftklebemassen**

Es wurden folgende Adhäsive in verschiedenen Testklebebändern getestet:

**Adhäsiv A (Referenz 1)**: Adhäsiv des Produkts tesa 6940 PV1 - HHR (Vergleichsadhäsiv) Adhäsiv A ist eine Acryl-Haftklebemasse, welche mit einem Harz und UV-Pigmenten modifiziert ist. Kohäsion/Weichheit: 45,1 μm

**Adhäsiv B (Referenz II)**: Adhäsiv des 6930 PV6 AF48 (Vergleichsadhäsiv)
Adhäsiv B ist eine Acryl-Haftklebemasse, welche mit einem Weichmacher und UV-Pigmenten modifiziert ist und damit weicher als Adhäsiv A und C. Kohäsion/Weichheit: 117,6 μm

**Adhäsiv C (Klebemasse 1)**: Alternative I - geringe Abweichung zu Adhäsiv A
Adhäsiv C ist eine Acryl-Haftklebemasse, welche mit einem Harz und UV-Pigmenten modifiziert ist und eine höhere Polarität aufweist als die Adhäsive A und B. Seine Haftkraft entspricht der Haftkraft des Adhäsivs A. Kohäsion/Weichheit: 60,0 μm

**Adhäsiv D (Klebemasse 2):** Alternative II - starke Abweichung zu Adhäsiv A
Adhäsiv D ist eine Acryl-Haftklebemasse, welche mit einem Harz und UV-Pigmenten modifiziert ist und weicher ist als die Adhäsive A, B und C. Seine Haftkraft ist höher als die des Adhäsivs A. Kohäsion/Weichheit: 206,1 μm

**Adhäsiv E (Klebemasse 3):** Alternative III - geringe Abweichung zu Adhäsiv A
Adhäsiv E ist ein Acryl- Haftklebemasse, welches mit einem Harz und UV-Pigmenten modifiziert ist und eine höhere Polarität aufweist als die Adhäsive A, B, C und D. Seine Haftkraft ist höher als die Haftkraft des Adhäsivs A.

**Beispiel 3: Haftkraft der Adhäsive, insbesondere der Haftklebemassen**

**Tabelle 2a:** Temperaturabhängige Haftkraft

| Temperatur | Referenz I [N/cm] | Referenz II [N/cm] | Klebmasse I [N/cm] | Klebmasse III [N/cm] |
|---|---|---|---|---|
| 23 °C | 6,43 | 5,14 | 5,96 | 9,89 |
| 40 °C | 5,61 | 5,87 | 5,40 | 8,65 |
| 70 °C | 4,15 | 3,93 | 4,38 | 7,29 |
| 100 °C | 3,67 | 3,07 | 3,27 | 5,89 |

Die temperaturabhängige Bestimmung der Haftkraft zeigt eine Abnahme der Haftkraft bei ansteigender Temperatur.

**Tabelle 2b:** Von der Verklebungszeit abhängige Haftkraft in N/cm

| Verklebungszeit | Referenz I [N/cm] | Referenz II [N/cm] | Klebmasse I [N/cm] | Klebmasse III [N/cm] | Klebmasse II [N/cm] |
|---|---|---|---|---|---|
| 0 | 4,57 | 2,72 | 4,53 | 6,07 | 6,6 |
| 20 Minuten | 4,97 | 3,78 | 5,20 | 7,37 | 8,2 |
| 60 Minuten | 5,13 | 3,83 | 5,22 | 7,9 | 8,7 |
| 24 Stunden | 6,02 | 4,91 | 5,64 | 9,12 | 9,4 |
| 72 Stunden | 6,43 | 5,14 | 5,96 | 9,42 | 10,8 |

**Tabelle 2c:** Von der Verklebungszeit abhängige Haftkraft in %

| Verklebungszeit | Referenz I [%] | Referenz II [%] | Klebmasse I [%] | Klebmasse III [%] | Klebmasse II [%] |
|---|---|---|---|---|---|
| 0 | 71 | 53 | 76 | 64 | 70 |

(fortgesetzt)

| Verklebungszeit | Referenz I [%] | Referenz II [%] | Klebmasse I [%] | Klebmasse III [%] | Klebmasse II [%] |
|---|---|---|---|---|---|
| 20 Minuten | 77 | 74 | 87 | 78 | 76 |
| 60 Minuten | 80 | 75 | 88 | - | 80 |
| 24 Stunden | 94 | 96 | 95 | 97 | 87 |
| 72 Stunden | 100 | 100 | 100 | 100 | 100 |

Mit ansteigender Verklebungszeit nimmt die Haftkraft der Adhäsive, insbesondere der Haftklebemasse, zum Untergrund zu (Tabelle 2b). Ausgehend von der vollständigen Benetzung (100%) nach 72 h des Untergrund mit der jeweiligen Haftklebemasse, ist nach einer kürzeren Verklebungszeit von 24 h die Benetzung des Untergrundes mit der Haftklebemasse, insbesondere die Anhaftung des Adhäsivs A, B, C, D oder E an dem Untergrund, mit 95 % bis 97 % nicht abgeschlossen. In Regionen des Klebebandes mit unvollständiger Benetzung der Oberfläche mit der Haftklebemasse besteht die Gefahr der Blasenbildung oder Aufquellen der Klebebänder im Wasserstress-Test. Die Klebmasse III weist mit 9,42 N/cm nach einer Verklebungszeit von 72 h die höchste Haftkraft auf, was auf die erhöhte Kohäsion/Weichheit der Klebmasse III zurückgeführt werden kann. Nach einer Verklebungszeit von 72 h weist die Klebmasse III eine um ca. 31 % höhere Haftkraft auf als die referenz-Klebmasse I (6,43 N/cm) und eine um ca. 45 % höhere Haftkraft als Adhäsiv B (5,14 N/cm).

**Beispiel 4: Wasserabsorption der Laserfilme**

**Tabelle 3**: Wasserabsorption

| | Unbehandelt [%] | 72 h 50 °C/1 h [%] | 72 h 50 °C/24 h [%] |
|---|---|---|---|
| Laserfilm mit Referenz-Klebmasse | 0,75 | 1,44 | 0,99 |
| Laserfilm mit Klebmasse III | 0,88 | 1,56 | 1,22 |

Im Vergleich zu den unbehandelten Laserfilmen 6930 PV6 und 6940 PV1 die einen Wassergehalt von 0,75 % und 0,88 % aufweisen, ist eine Zunahme des Wassergehaltes nach einer Lagerung für 72 h im Wasser nachweisbar. Abhängig von der Rekonditionierungszeit von 1 h und 24 h entweicht das Wasser aus dem aufgequollenen Laserfilm, was an dem abnehmend messbaren Wassergehalt in der Haftklebemasse von 1,44 % zu 0,99 % und von 1,56 % zu 1,22 % nachweisbar ist.

**Beispiel 5: Hochtemperatur Wasserstress-Test**

**Tabelle 4:** Wasserbeständigkeit

| Wasser-temperatur | Verklebungszeit [h] | Referenz I | Referenz II | Klebmasse I | Klebmasse II | Klebmasse III |
|---|---|---|---|---|---|---|
| 80 °C | 1 | 0 | - | 0 | ++ | ++ |
| | 24 | 0/+ | 0 | + | ++ | ++ |
| | 72 | ++ | 0 | ++ | ++ | ++ |
| 90 °C | 1 | - | 0 | 0 | ++ | ++ |
| | 24 | -/0 | 0 | ++ | ++ | ++ |
| | 72 | - | - | ++ | ++ | ++ |

(fortgesetzt)

| Wasser-temperatur | Verklebungszeit [h] | Referenz I | Referenz II | Klebmasse I | Klebmasse II | Klebmasse III |
|---|---|---|---|---|---|---|
| 100 °C | 1 | - | - | ++ | ++ | ++ |
| | 24 | - | - | + | ++ | ++ |
| | 72 | - | 0 | ++ | ++ | ++ |
| **--** = vollständiges Ablösen, größer 50 % der Fläche; **-** = schweres Kantenabheben, größer 10% der Fläche; **0** = leichtes Kantenanheben, reversibel; **+** = einzelne Blasen, reversibel, durch Andrücken entfernbar; **++** = keine Änderung des Materials | | | | | | |

Klebmasse III zeigt eine durchgehend bei allen Temperaturen und unabhängig von der Verklebungszeit beziehungsweise Benetzungszeit gute Wasserbeständigkeit. Dagegen nimmt die Wasserbeständigkeit vom Klebmasse I mit kürzerer Verklebungszeit und zunehmender Temperatur ab. Adhäsiv B zeigt die geringste Wasserbeständigkeit bei einer Temperatur von 100 °C und einer Verklebungszeit von 1 h auf. Adhäsiv A weist durchgehend eine geringe bis schlechte Wasserbeständigkeit auf und besonders gering bei 90 °C und 100 °C.

Der Einfluss der Rekonditionierungszeit ist in Abb. 9 und Abb. 10 gezeigt. Nach einer Verklebungszeit von 1 h und einer anschließenden Einwirkung einer Wassertemperatur von 100 °C auf das mit der Referenz-Klebmasse I verklebte Testklebeband, zeigt dieses direkt nach Entnahme aus dem Wasser ein deutliches Kantenanheben (Abb. 9a)). Nach einer Rekonditionierungszeit von 24 h erhält das Klebeband einen vollflächig haftenden Zustand wieder zurück (Abb. 9b)).

Im Gegensatz zur Referenz-Klebmasse zeigt das mit die Klebmasse III verklebte Testklebeband nach einer Verklebungszeit von 1 h und einer anschließenden Einwirkung einer Wassertemperatur von 100 °C nach direkter Entnahme aus dem Wasser Blasenbildung (Abb. 10a)). Allerdings sind nach einer Rekonditionierungszeit von 24 h keine Blasen mehr zurückgeblieben und das Klebeband erreicht einen blasenfreien haftenden Zustand wieder zurück (Abb. 10b)).

**Beispiel 6: Ergebnisse des Wasserstress-Tests**

Die vorbeschriebenen Adhäsive wurden im beschriebenen Wasserstress-Test getestet.

Nach 500 h bei 40 °C zeigten die Testoberflächen in allen Fällen nach einer Verklebungszeit von 72 h keine Änderung des Materials und damit auch kein Kantenabheben oder Ablösen vom Untergrund, wie exemplarisch für Adhäsiv A und B in Abb. 6a) und 6b) gezeigt.

Nach 500 h bei 60 °C zeigten die zuvor für 72 h mit der Referenzklebmasse I verklebten Testklebebänder ein leichtes reversibles Kantenabheben und leichte Blasenbildung (Abb. 7a)). Für das Adhäsiv B war nach einer Verklebungszeit von 72 h ein schweres Kantenabheben, Blasenbildung und Ablösen der Testoberfläche vom Untergrund zu beobachten (Abb. 7b)). Für die Klebmassen I, II und III wurde nur ein leichtes reversibles Kantenabheben oder keine Änderung des Materials festgestellt. Somit weisen die Klebmassen I, II und III im Wasserstress-Test eine verbesserte Beständigkeit gegenüber Wasser auf als die Referenzklebmasse I und B.

Nach 1000 h bei 40 °C wurden ähnliche Ergebnisse wie nach 500 h bei 40 °C erzielt, wobei die mit der Referenzklebmasse I und B für 72 h verklebten Testklebebänder bereits leichte Blasenbildung aufwiesen. Klebmassen I, II und III zeigten keine Änderung des Materials und zeigen damit eine verbesserte Beständigkeit gegenüber Wasser auf als die Referenzklebmasse I und B

Nach 1000 h bei 60 °C sind bei dem mit der Referenzklebmasse für 72 h verklebten Testklebeband Blasenbildung und leichtes Kantenabheben zu erkennen (Abb. 8a)). Adhäsiv B besteht den Wasserstress-Test bei 60 °C für 100 h nicht und weist ein schweres Kantenabheben, Blasenbildung und Ablösen vom Untergrund auf (Abb. 8b)). Klebmasse I und III weisen nur ein leichtes Kantenabheben auf und zeigen damit eine verbesserte Resistenz gegenüber Wasser auf als die Referenzklebmasse I und B (Abb. 8c) und Abb. 8d)).

Die Versuche mit den vorbeschriebenen Adhäsiven zeigen, dass eine ausreichend hohe Haftung des Adhäsivs, insbesondere der Haftklebemasse, an den Untergrund und/oder eine ausreichend hohe Weichheit des Adhäsivs die in Länge und Breite wirkende Dehnungskraft, insbesondere auf die Folie, kompensieren kann. Die Klebmassen I, II und III zeigen eine erhöhte Beständigkeit gegenüber Wasser, was auf die erhöhte Polarität der Polymere und die Weichheit des Adhäsivs, insbesondere der Haftklebemasse, zurückzuführen ist. Alle drei Klebmassen I, II und III bestehen den Wasserstress-Test bei 40 °C und zeigen verbesserte Eigenschaften bei 60 °C als die Referenzklebmassen A und B.

## Patentansprüche

**1.** Wasserbeständiger laserbeschriftbarer mehrschichtiger Artikel umfassend mindestens die folgenden Schichten

(1) mindestens eine Gravierschicht,
(2) mindestens eine Kontrastschicht, angeordnet unter der Gravierschicht und
(3) mindestens eine Klebschicht umfassend die Haftklebemasse K, angeordnet unter der Kontrastschicht,

wobei die Haftklebemasse K das Vernetzungsprodukt ist aus einer Polymermasse umfassend mindestens die folgenden Komponenten

(A) mindestens eine Polymerkomponente A umfassend:

(i) größer gleich 60 Gew.-% bis kleiner gleich 80 Gew.-% bezogen auf den Gehalt der Polymerkomponente A mindestens einer Komponente A1, wobei die Komponente A1 umfasst:

(i-a) größer gleich 2,5 Gew.-% bis kleiner gleich 15 Gew.-%, bezogen auf den Gesamtgehalt der Komponente A1, mindestens eines Monomers a umfassend Verbindungen mit mindestens einer ethylenisch ungesättigten Bindung, das jeweils derart gewählt ist, dass die Glasübergangstemperatur TG des entsprechenden Homopolymers aus dem jeweiligen Monomer a mindestens 0 °C beträgt, wobei mindestens ein Teil des Gesamtanteils am Monomer a als mindestens ein Monomer a1 umfassend Verbindungen mit mindestens einer ethylenisch ungesättigten Bindung und mindestens einer Carbonsäure-Gruppe vorliegt, und
(i-b) größer gleich 85 Gew.-% bis kleiner gleich 97,5 Gew.-%, bezogen auf den Gesamtgehalt der Komponente A1, mindestens eines Monomers b ausgewählt aus der Gruppe der Acrylsäureester und/oder Methacrylsäureester, das jeweils derart gewählt ist, dass die Glasübergangstemperatur TG des entsprechenden Homopolymers aus dem jeweiligen Monomer b kleiner gleich -30 °C beträgt,

wobei das (i-a) mindestens eine Monomer a und das (i-b) mindestens eine Monomer b in Summe mit einem Anteil von 100 Gew.-% in der Komponente A1 vorliegen,
(ii) größer gleich 20 Gew.-% bis kleiner gleich 40 Gew.-%, bezogen auf den Gehalt der Polymerkomponente A, mindestens einer Harzkomponente A2,

wobei die (i) mindestens eine Komponente A1 und die (ii) mindestens eine Harzkomponente A2 in Summe mit einem Anteil von 100 Gew.-% in der Polymerkomponente A vorliegen und
(B) mindestens eine Vernetzerkomponente B umfassend kovalent vernetzende bi- oder polyfunktionelle Verbindungen,

wobei die (A) mindestens eine Polymerkomponente A und die (B) mindestens eine Vernetzerkomponente B in Summe mit einem Anteil von größer gleich 95 Gew.-% an der Gesamtzusammensetzung der Polymermasse vorliegen.

**2.** Artikel nach Anspruch 1, **dadurch gekennzeichnet, dass** die Klebschicht der Haftklebemasse K umfassend das Monomer a1 ausgewählt wird aus Acrylsäure und/oder Methacrylsäure mit einem Anteil von größer gleich 2,5 Gew.-% bis kleiner gleich 15 Gew.-% bezogen auf den Gesamtgehalt der Komponente A1, vorzugsweise größer gleich 2,5 Gew.-% bis kleiner gleich 8 Gew.-%.

**3.** Artikel nach Anspruch 1, **dadurch gekennzeichnet, dass** das (i-a) mindestens eine Monomer a ausgewählt wird aus

(a1) einem Monomer a1 umfassend ethylenisch ungesättigte Verbindungen mit einem $T_G$ von größer gleich 0 °C und mindestens einer Carbonsäure-Gruppe,
(a2) einem Monomer a2 umfassend ethylenisch ungesättigte Verbindungen mit einem $T_G$ größer gleich 0 °C und mindestens einer Ester-Gruppe und/oder
(a3) einem Monomer a3 umfassend ethylenisch ungesättigte Verbindungen mit einem $T_G$ größer gleich 0 °C, welche weder Carboxy-Gruppen (-COOH) noch Ester-Gruppen mit einem Ethyl- und/oder Methylrest umfassen,

wobei der Anteil des Monomers a bei größer gleich 1 Gew.-% bis kleiner gleich 15 Gew.-% bezogen auf den Gesamtgehalt der Komponente A1 liegt und wobei der Anteil des Monomers a1 davon bei größer gleich 1 Gew.-%

bis kleiner gleich 8 Gew.-% bezogen auf den Gesamtgehalt der Komponente A1 liegt.

**4.** Artikel nach einem der Ansprüche 1 bis 3, **dadurch gekennzeichnet, dass** das mindestens eine Monomer b ausgewählt wird aus der Gruppe umfassend Acrylsäureester mit linearen, verzweigten und/oder durch funktionelle Gruppen substituierte Alkylreste, wobei der lineare Alkylrest größer gleich 3 Kohlenstoffatome bis kleiner gleich 14 Kohlenstoffatome aufweist.

**5.** Artikel nach einem der Ansprüche 1 bis 4, **dadurch gekennzeichnet, dass** das mindestens eine Monomer b ausgewählt wird aus

a) unsubstituierten linearen Acrylsäureestern umfassend Acrylsäuremethylester, Acrylsäurebutylester, Propylacrylat, n-Pentylacrylat, n-Hexylacrylat, n-Heptylacrylat, n-Octylacrylat, n-Nonylacrylat, n-Decylacrylat, n-Undecylacrylat, n-Dodecylacrylat, n-Tridecylacrylat, n-Tetradecylacrylat und/oder
b) verzweigten unsubstituierten und/oder substituierten Acrylsäureester umfassend 2-Heptylacrylat, 2-Octylacrylat, Ethylhexylacrylat, 2-Ethoxyethylacrylat, 2-Ethylhexylacrylat, 2-Ethylbutylacrylat, 3-Methoxybutylacrylat, 2-Methoxyethylacrylat, 3-Methoxypropylacrylat, 3-Methylbutylacrylat und Isodecylacrylat

mit einem Gehalt von größer gleich 87 Gew.-% bis kleiner gleich 100 Gew.-% bezogen auf den Gesamtgehalt der Komponente A1.

**6.** Artikel nach einem der Ansprüche 1 bis 5, **dadurch gekennzeichnet, dass** die Kontrastschicht auf einer gehärteten Acrylatlackzusammensetzung basiert, umfassend

(a) größer gleich 30 Gew.-% bis kleiner gleich 80 Gew.-% eines trifunktionellen Oligomers A
(b) größer gleich 0 Gew.-% bis kleiner gleich 20 Gew.-% eines trifunktionellen Monomers B
(c) größer gleich 1 Gew.-% bis kleiner gleich 30 Gew.-% eines difunktionellen Monomers C und
(d) größer gleich 2 Gew.-% bis kleiner gleich 40 Gew.-% eines farbgebenden Pigmentes.

**7.** Artikel nach einem der Ansprüche 1 bis 6, **dadurch gekennzeichnet, dass** dieser im Hochtemperatur-Wasserstress-Test bei 100 °C für 15 Minuten wasserbeständig ist.

**8.** Artikel nach einem der Ansprüche 1 bis 7, **dadurch gekennzeichnet, dass** dieser eine Haftkraft, gemessen als Schälkraft gemäß ISO 29862, größer gleich 5 N/cm bei 23 °C aufweist.

**9.** Artikel nach einem der Ansprüche 1 bis 8, **dadurch gekennzeichnet, dass** er in Form eines Etiketts, Folie und/oder Stanzling vorliegt.

**10.** Verfahren zur Herstellung eines mehrschichtigen Artikels nach einem der Ansprüche 1 bis 9 umfassend die folgenden Schritte:

1) Bereitstellen einer Stützfolie,
2) Aufbringen einer Gravierschicht auf die Stützfolie,
3) Aufbringen einer Zusammensetzung zur Herstellung einer Kontrastschicht auf die Gravierschicht,
4) Härten der Zusammensetzung aus Schritt 3), um eine Kontrastschicht zu erhalten,
5) Aufbringen einer Haftklebemasse K auf die Kontrastschicht sowie das Bedecken der Haftklebemasse K mit einem Schutzpapier oder Release-Liner, wobei die Haftklebemasse K das Vernetzungsprodukt ist aus einer Polymermasse umfassend mindestens die folgenden Komponenten

(A) mindestens eine Polymerkomponente A umfassend

(i) größer gleich 60 Gew.-% bis kleiner gleich 80 Gew.-% bezogen auf den Gehalt der Polymerkomponente A mindestens einer Komponente A1 , wobei die Komponente A1 umfasst

(i-a) größer gleich 3 Gew.-% bis kleiner gleich 15 Gew.-%, bezogen auf den Gesamtgehalt der Komponente A1, mindestens eines Monomers a umfassend Verbindungen mit mindestens einer ethylenisch ungesättigten Bindung, das jeweils derart gewählt ist, dass die Glasübergangstemperatur TG des entsprechenden Homopolymers aus dem jeweiligen Monomer a mindestens 0 °C beträgt,

wobei mindestens ein Teil des Gesamtanteils am Monomer a als mindestens ein Monomer a1 umfassend Verbindungen mit mindestens einer ethylenisch ungesättigten Bindung und mindestens einer Carbonsäure-Gruppe vorliegt, und
(i-b) größer gleich 85 Gew.-% bis kleiner gleich 97 Gew.-%, bezogen auf den Gesamtgehalt der Komponente A1, mindestens eines Monomers b ausgewählt aus der Gruppe der Acrylsäureester und/oder Methacrylsäureester, das jeweils derart gewählt ist, dass die Glasübergangstemperatur TG des entsprechenden Homopolymers aus dem jeweiligen Monomer b kleiner gleich - 30 °C beträgt,

wobei das (i-a) mindestens eine Monomer a und das (i-b) mindestens eine Monomer b in Summe mit einem Anteil von 100 Gew.-% in der Komponente A1 vorliegen,
(ii) größer gleich 20 Gew.-% bis kleiner gleich 40 Gew.-%, bezogen auf den Gehalt der Polymerkomponente A, mindestens einer Harzkomponente A2,

wobei die (i) mindestens eine Komponente A1 und die (ii) mindestens eine Harzkomponente A2 in Summe mit einem Anteil von 100 Gew.-% in der Polymerkomponente A vorliegen und
(B) mindestens einen Vernetzerkomponente B umfassend kovalent vernetzende bi- oder polyfunktionelle Verbindungen,

wobei die (A) mindestens eine Polymerkomponente A und die (B) mindestens eine Vernetzerkomponente B in Summe mit einem Anteil von größer gleich 95 Gew.-% an der Gesamtzusammensetzung der Polymermasse vorliegen,
6) und das Entfernen der Stützfolie.

**11.** Verfahren zur Herstellung eines mehrschichtigen Artikels nach Anspruch 10, **dadurch gekennzeichnet, dass** in Schritt 3) eine Zusammensetzung aufgebracht wird, umfassend

(a) größer gleich 30 Gew.-% bis kleiner gleich 80 Gew.-% eines trifunktionellen Oligomers A
(b) größer gleich 0 Gew.-% bis kleiner gleich 20 Gew.-% eines trifunktionellen Monomers B
(c) größer gleich 1 Gew.-% bis kleiner gleich 30 Gew.-% eines difunktionellen Monomers C und
(d) größer gleich 2 Gew.-% bis kleiner gleich 40 Gew.-% eines farbgebenden Pigmentes.

**Claims**

**1.** Water-resistant, laser-writable multilayer article comprising at least the following layers:

(1) at least one engraving layer,
(2) at least one contrast layer, disposed below the engraving layer, and
(3) at least one adhesive layer comprising the PSA K, disposed below the contrast layer,

the PSA K being the product of crosslinking of a polymer material comprising at least the following components:

(A) at least one polymer component A comprising:

(i) greater than or equal to 60 wt% to less than or equal to 80 wt%, based on the amount of polymer component A, of at least one component A1, component A1 comprising:

(i-a) greater than or equal to 2.5 wt% to less than or equal to 15 wt%, based on the total amount of component A1, of at least one monomer a comprising compounds having at least one ethylenically unsaturated bond, and selected in each case such that the glass transition temperature Tg of the corresponding homopolymer of the respective monomer a is at least 0°C, at least part of the total fraction of monomer a being present as at least one monomer a1 comprising compounds having at least one ethylenically unsaturated bond and at least one carboxylic acid group, and
(i-b) greater than or equal to 85 wt% to less than or equal to 97.5 wt%, based on the total amount of component A1, of at least one monomer b selected from the group of acrylic esters and/or methacrylic esters, selected in each case such that the glass transition temperature Tg of the corresponding homopolymer of the respective monomer b is less than or equal to -30°C,

the (i-a) at least one monomer a and the (i-b) at least one monomer b being present in total with a fraction of 100 wt% in component A1,

(ii) greater than or equal to 20 wt% to less than or equal to 40 wt%, based on the amount of polymer component A, of at least one resin component A2,

the (i) at least one component A1 and the (ii) at least one resin component A2 being present in total with a fraction of 100 wt% in polymer component A, and

(B) at least one crosslinker component B comprising covalently crosslinking di- or polyfunctional compounds,

the (A) at least one polymer component A and the (B) at least one crosslinker component B being present in total with a fraction of greater than or equal to 95 wt% in the overall composition of the polymer material.

2. Article according to Claim 1, **characterized in that** the adhesive layer of the PSA K comprising the monomer a1 is selected from acrylic acid and/or methacrylic acid with a fraction of greater than or equal to 2.5 wt% to less than or equal to 15 wt%, based on the total amount of component A1, preferably greater than or equal to 2.5 wt% to less than or equal to 8 wt%.

3. Article according to Claim 1, **characterized in that** the (i-a) at least one monomer a is selected from

(a1) a monomer a1 comprising ethylenically unsaturated compounds having a $T_g$ of greater than or equal to 0°C and at least one carboxylic acid group,

(a2) a monomer a2 comprising ethylenically unsaturated compounds having a $T_g$ of greater than or equal to 0°C and at least one ester group, and/or

(a3) a monomer a3 comprising ethylenically unsaturated compounds having a $T_g$ of greater than or equal to 0°C and comprising neither carboxyl groups (-COOH) nor ester groups with an ethyl and/or methyl radical,

the fraction of the monomer a being greater than or equal to 1 wt% to less than or equal to 15 wt%, based on the total amount of component A1, and the fraction of the monomer a1 therein being greater than or equal to 1 wt% to less than or equal to 8 wt%, based on the total amount of component A1.

4. Article according to any of Claims 1 to 3, **characterized in that** the at least one monomer b is selected from the group comprising acrylic esters having linear, branched and/or functional-group-substituted alkyl radicals, the linear alkyl radical having greater than or equal to 3 carbon atoms to less than or equal to 14 carbon atoms.

5. Article according to any of Claims 1 to 4, **characterized in that** the at least one monomer b is selected from

a) unsubstituted linear acrylic esters comprising methyl acrylate, butyl acrylate, propyl acrylate, n-pentyl acrylate, n-hexyl acrylate, n-heptyl acrylate, n-octyl acrylate, n-nonyl acrylate, n-decyl acrylate, n-undecyl acrylate, n-dodecyl acrylate, n-tridecyl acrylate, n-tetradecyl acrylate and/or

b) branched unsubstituted and/or substituted acrylic esters comprising 2-heptyl acrylate, 2-octyl acrylate, ethylhexyl acrylate, 2-ethoxyethyl acrylate, 2-ethylhexyl acrylate, 2-ethylbutyl acrylate, 3-methoxybutyl acrylate, 2-methoxyethyl acrylate, 3-methoxypropyl acrylate, 3-methylbutyl acrylate and isodecyl acrylate

with an amount of greater than or equal to 87 wt% to less than or equal to 100 wt%, based on the total amount of component A1.

6. Article according to any of Claims 1 to 5, **characterized in that** the contrast layer is based on a cured acrylate varnish composition comprising

(a) greater than or equal to 30 wt% to less than or equal to 80 wt% of a trifunctional oligomer A

(b) greater than or equal to 0 wt% to less than or equal to 20 wt% of a trifunctional monomer B

(c) greater than or equal to 1 wt% to less than or equal to 30 wt% of a difunctional monomer C and

(d) greater than or equal to 2 wt% to less than or equal to 40 wt% of a colouring pigment.

7. Article according to any of Claims 1 to 6, **characterized in that** in the high-temperature water stress test at 100°C it is water-resistant for 15 minutes.

8. Article according to any of Claims 1 to 7, **characterized in that** it has an adhesive force, measured as peel strength

to ISO 29862, of greater than or equal to 5 N/cm at 23°C.

9. Article according to any of Claims 1 to 8, **characterized in that** it is in the form of a label, film and/or diecut.

10. Method for producing a multilayer article according to any of Claims 1 to 9, comprising the following steps:

1) providing a support film,
2) applying an engraving layer to the support film,
3) applying a composition for producing a contrast layer to the engraving layer,
4) curing the composition from step 3), to give a contrast layer,
5) applying a PSA K to the contrast layer and covering the PSA K with a protective paper or release liner, the PSA K being the product of crosslinking of a polymer material comprising at least the following components:

(A) at least one polymer component A, comprising:

(i) greater than or equal to 60 wt% to less than or equal to 80 wt%, based on the amount of polymer component A, of at least one component A1, component A1 comprising:

(i-a) greater than or equal to 3 wt% to less than or equal to 15 wt%, based on the total amount of component A1, of at least one monomer a comprising compounds having at least one ethylenically unsaturated bond, and selected in each case such that the glass transition temperature Tg of the corresponding homopolymer of the respective monomer a is at least 0°C,
at least part of the total fraction of monomer a being present as at least one monomer a1 comprising compounds having at least one ethylenically unsaturated bond and at least one carboxylic acid group, and
(i-b) greater than or equal to 85 wt% to less than or equal to 97 wt%, based on the total amount of component A1, of at least one monomer b selected from the group of acrylic esters and/or methacrylic esters, selected in each case such that the glass transition temperature Tg of the corresponding homopolymer of the respective monomer b is less than or equal to -30°C,
the (i-a) at least one monomer a and the (i-b) at least one monomer b being present in total with a fraction of 100 wt% in component A1,

(ii) greater than or equal to 20 wt% to less than or equal to 40 wt%, based on the amount of polymer component A, of at least one resin component A2,

the (i) at least one component A1 and the (ii) at least one resin component A2 being present in total with a fraction of 100 wt% in polymer component A, and
(B) at least one crosslinker component B comprising covalently crosslinking di- or polyfunctional compounds,

the (A) at least one polymer component A and the (B) at least one crosslinker component B being present in total with a fraction of greater than or equal to 95 wt% in the overall composition of the polymer material,
6) and removing the support film.

11. Method for producing a multilayer article according to Claim 10, **characterized in that** in step 3) a composition is applied comprising

(a) greater than or equal to 30 wt% to less than or equal to 80 wt% of a trifunctional oligomer A
(b) greater than or equal to 0 wt% to less than or equal to 20 wt% of a trifunctional monomer B
(c) greater than or equal to 1 wt% to less than or equal to 30 wt% of a difunctional monomer C and
(d) greater than or equal to 2 wt% to less than or equal to 40 wt% of a colouring pigment.

## Revendications

1. Article multicouche inscriptible par laser, résistant à l'eau, comprenant au moins les couches suivantes :

(1) au moins une couche de gravure,
(2) au moins une couche de contraste, agencée sous la couche de gravure, et

(3) au moins une couche adhésive comprenant la masse adhésive de contact K, agencée sous la couche de contraste,

la masse adhésive de contact K étant le produit de réticulation d'une masse polymère comprenant au moins les composants suivants :

(A) au moins un composant polymère A, comprenant :

(i) une quantité supérieure ou égale à 60 % en poids à inférieure ou égale à 80 % en poids, par rapport à la teneur du composant polymère A, d'au moins un composant A1, le composant A1 comprenant :

(i-a) une quantité supérieure ou égale à 2,5 % en poids à inférieure ou égale à 15 % en poids, par rapport à la teneur totale du composant A1, d'au moins un monomère a comprenant des composés contenant au moins une liaison éthyléniquement insaturée, qui est à chaque fois choisi de telle sorte que la température de transition vitreuse TG de l'homopolymère correspondant du monomère a respectif soit d'au moins 0 °C, au moins une partie de la proportion totale de monomère a se présentant sous la forme d'au moins un monomère a1 comprenant des composés contenant au moins une liaison éthyléniquement insaturée et au moins un groupe acide carboxylique, et
(i-b) une quantité supérieure ou égale à 85 % en poids à inférieure ou égale à 97,5 % en poids, par rapport à la teneur totale du composant A1, d'au moins un monomère b choisi dans le groupe constitué par les esters de l'acide acrylique et/ou les esters de l'acide méthacrylique, qui est à chaque fois choisi de telle sorte que la température de transition vitreuse TG de l'homopolymère correspondant du monomère b respectif soit inférieure ou égale à -30 °C,

ledit (i-a) au moins un monomère a et ledit (i-b) au moins un monomère b étant présents au total en une proportion de 100 % en poids dans le composant A1,
(ii) une quantité supérieure ou égale à 20 % en poids à inférieure ou égale à 40 % en poids, par rapport à la teneur du composant polymère A, d'au moins un composant résine A2,
ledit (i) au moins un composant A1 et ledit (ii) au moins un composant résine A2 étant présents au total en une proportion de 100 % en poids dans le composant polymère A, et

(B) au moins un composant agent de réticulation B comprenant des composés bi- ou polyfonctionnels réticulants par des liaisons covalentes,
ledit (A) au moins un composant polymère A et ledit (B) au moins un composant agent de réticulation B étant présents au total en une proportion supérieure ou égale à 95 % en poids dans la composition totale de la masse polymère.

2. Article selon la revendication 1, **caractérisé en ce que** la couche adhésive de la masse adhésive de contact K comprenant le monomère a1 est choisie parmi l'acide acrylique et/ou l'acide méthacrylique en une proportion supérieure ou égale à 2,5 % en poids à inférieure ou égale à 15 % en poids, par rapport à la teneur totale du composant A1, de préférence supérieure ou égale à 2,5 % en poids à inférieure ou égale à 8 % en poids.

3. Article selon la revendication 1, **caractérisé en ce que** ledit (i-a) au moins un monomère a est choisi parmi :

(a1) un monomère a1 comprenant des composés éthyléniquement insaturés ayant une $T_G$ supérieure ou égale à 0 °C et au moins un groupe acide carboxylique,
(a2) un monomère a2 comprenant des composés éthyléniquement insaturés ayant une $T_G$ supérieure ou égale à 0 °C et au moins un groupe ester et/ou
(a3) un monomère a3 comprenant des composés éthyléniquement insaturés ayant une $T_G$ supérieure ou égale à 0 °C, qui ne comprennent ni des groupes carboxy (-COOH), ni des groupes ester avec un radical éthyle et/ou méthyle,

la proportion du monomère a étant supérieure ou égale à 1 % en poids à inférieure ou égale à 15 % en poids, par rapport à la teneur totale du composant A1 et la proportion du monomère a1 étant supérieure ou égale à 1 % en poids à inférieure ou égale à 8 % en poids, par rapport à la teneur totale du composant A1.

4. Article selon l'une quelconque des revendications 1 à 3, **caractérisé en ce que** ledit au moins un monomère b est choisi dans le groupe comprenant les esters de l'acide acrylique contenant des radicaux alkyle substitués avec des

groupes linéaires, ramifiés et/ou substitués par des groupes fonctionnels, le radical alkyle linéaire comprenant une quantité d'atomes de carbone supérieure ou égale à 3 atomes de carbone à inférieure ou égale à 14 atomes de carbone.

**5.** Article selon l'une quelconque des revendications 1 à 4, **caractérisé en ce que** ledit au moins un monomère b est choisi parmi :

a) les esters de l'acide acrylique linéaires non substitués, comprenant l'ester méthylique de l'acide acrylique, l'ester butylique de l'acide acrylique, l'acrylate de propyle, l'acrylate de n-pentyle, l'acrylate de n-hexyle, l'acrylate de n-heptyle, l'acrylate de n-octyle, l'acrylate de n-nonyle, l'acrylate de n-décyle, l'acrylate de n-undécyle, l'acrylate de n-dodécyle, l'acrylate de n-tridécyle, l'acrylate de n-tétradécyle et/ou
b) les esters de l'acide acrylique ramifiés non substitués et/ou substitués comprenant l'acrylate de 2-heptyle, l'acrylate de 2-octyle, l'acrylate d'éthylhexyle, l'acrylate de 2-éthoxyéthyle, l'acrylate de 2-éthylhexyle, l'acrylate de 2-éthylbutyle, l'acrylate de 3-méthoxybutyle, l'acrylate de 2-méthoxyéthyle, l'acrylate de 3-méthoxypropyle, l'acrylate de 3-méthylbutyle et l'acrylate d'isodécyle, en une teneur supérieure ou égale à 87 % en poids à inférieure ou égale à 100 % en poids, par rapport à la teneur totale du composant A1.

**6.** Article selon l'une quelconque des revendications 1 à 5, **caractérisé en ce que** la couche de contraste est à base d'une composition de vernis d'acrylate durcie, comprenant :

(a) une quantité supérieure ou égale à 30 % en poids à inférieure ou égale à 80 % en poids d'un oligomère trifonctionnel A,
(b) une quantité supérieure ou égale à 0 % en poids à inférieure ou égale à 20 % en poids d'un monomère trifonctionnel B,
(c) une quantité supérieure ou égale à 1 % en poids à inférieure ou égale à 30 % en poids d'un monomère bifonctionnel C, et
(d) une quantité supérieure ou égale à 2 % en poids à inférieure ou égale à 40 % en poids d'un pigment colorant.

**7.** Article selon l'une quelconque des revendications 1 à 6, **caractérisé en ce que** celui-ci est résistant à l'eau lors du test de résistance à l'eau à température élevée à 100 °C pendant 15 minutes.

**8.** Article selon l'une quelconque des revendications 1 à 7, **caractérisé en ce que** celui-ci présente une force d'adhésion, mesurée en tant que force de pelage selon ISO 29862, supérieure ou égale à 5 N/cm à 23 °C.

**9.** Article selon l'une quelconque des revendications 1 à 8, **caractérisé en ce qu'**il se présente sous la forme d'une étiquette, d'une feuille et/ou d'une découpe.

**10.** Procédé de fabrication d'un article multicouche selon l'une quelconque des revendications 1 à 9, comprenant les étapes suivantes :

1) la préparation d'une feuille support,
2) l'application d'une couche de gravure sur la couche support,
3) l'application d'une composition pour la fabrication d'une couche de contraste sur la couche de gravure,
4) le durcissement de la composition de l'étape 3) afin d'obtenir une couche de contraste,
5) l'application d'une masse adhésive de contact K sur la couche de contraste, et le recouvrement de la masse adhésive de contact K avec un papier de protection ou un revêtement anti-adhérent, la masse adhésive de contact K étant le produit de réticulation d'une masse polymère comprenant au moins les composants suivants :

(A) au moins un composant polymère A, comprenant :

(i) une quantité supérieure ou égale à 60 % en poids à inférieure ou égale à 80 % en poids, par rapport à la teneur du composant polymère A, d'au moins un composant A1, le composant A1 comprenant :

(i-a) une quantité supérieure ou égale à 3 % en poids à inférieure ou égale à 15 % en poids, par rapport à la teneur totale du composant A1, d'au moins un monomère a comprenant des composés contenant au moins une liaison éthyléniquement insaturée, qui est à chaque fois choisi de telle sorte que la température de transition vitreuse TG de l'homopolymère correspondant du monomère a respectif soit d'au moins 0 °C,

au moins une partie de la proportion totale de monomère a se présentant sous la forme d'au moins un monomère a1 comprenant des composés contenant au moins une liaison éthyléniquement insaturée et au moins un groupe acide carboxylique, et
(i-b) une quantité supérieure ou égale à 85 % en poids à inférieure ou égale à 97 % en poids, par rapport à la teneur totale du composant A1, d'au moins un monomère b choisi dans le groupe constitué par les esters de l'acide acrylique et/ou les esters de l'acide méthacrylique, qui est à chaque fois choisi de telle sorte que la température de transition vitreuse TG de l'homopolymère correspondant du monomère b respectif soit inférieure ou égale à -30 °C,

ledit (i-a) au moins un monomère a et ledit (i-b) au moins un monomère b étant présents au total en une proportion de 100 % en poids dans le composant A1,
(ii) une quantité supérieure ou égale à 20 % en poids à inférieure ou égale à 40 % en poids, par rapport à la teneur du composant polymère A, d'au moins un composant résine A2,
ledit (i) au moins un composant A1 et ledit (ii) au moins un composant résine A2 étant présents au total en une proportion de 100 % en poids dans le composant polymère A, et

(B) au moins un composant agent de réticulation B comprenant des composés bi- ou polyfonctionnels réticulants par des liaisons covalentes,
ledit (A) au moins un composant polymère A et ledit (B) au moins un composant agent de réticulation B étant présents au total en une proportion supérieure ou égale à 95 % en poids dans la composition totale de la masse polymère,

6) et l'élimination de la feuille support.

**11.** Procédé de fabrication d'un article multicouche selon la revendication 10, **caractérisé en ce qu'**à l'étape 3), une composition est appliquée, comprenant :

(a) une quantité supérieure ou égale à 30 % en poids à inférieure ou égale à 80 % en poids d'un oligomère trifonctionnel A,
(b) une quantité supérieure ou égale à 0 % en poids à inférieure ou égale à 20 % en poids d'un monomère trifonctionnel B,
(c) une quantité supérieure ou égale à 1 % en poids à inférieure ou égale à 30 % en poids d'un monomère bifonctionnel C, et
(d) une quantité supérieure ou égale à 2 % en poids à inférieure ou égale à 40 % en poids d'un pigment colorant.

**Abbildungen**

Abb. 1

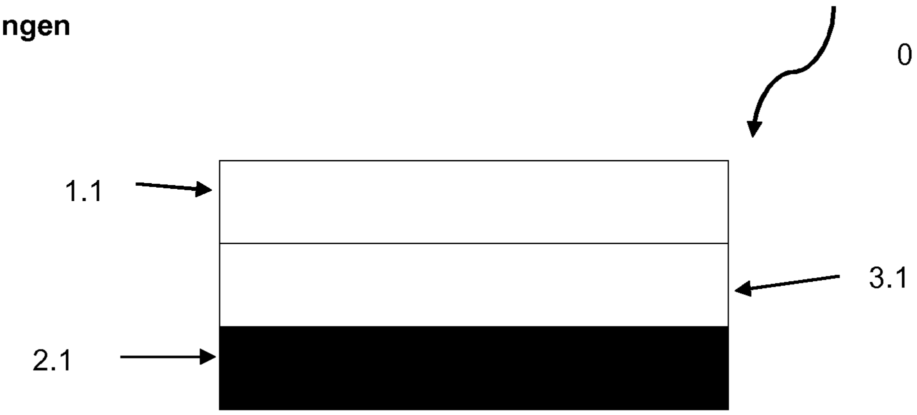


Abb. 2

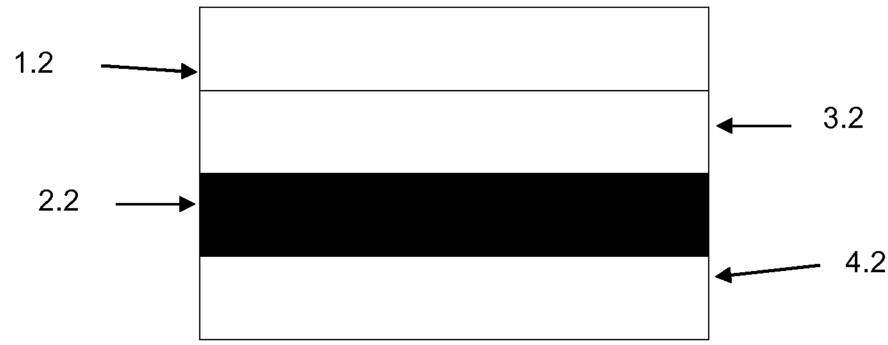


Abb. 3

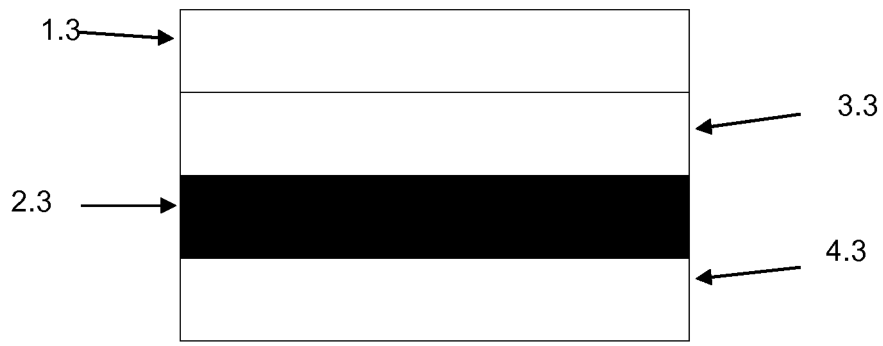

Abb. 4

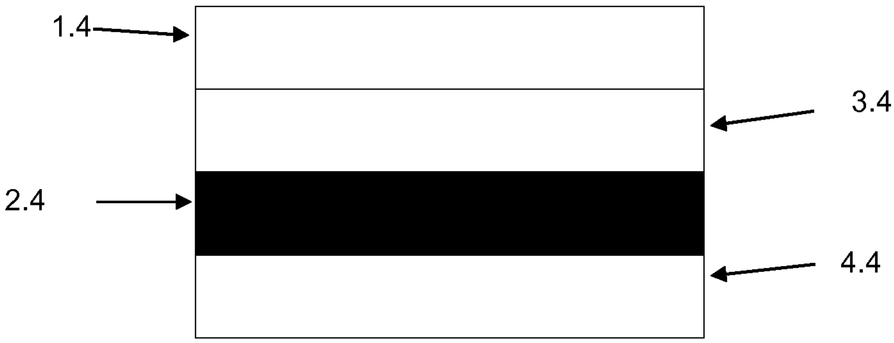

Abb. 5

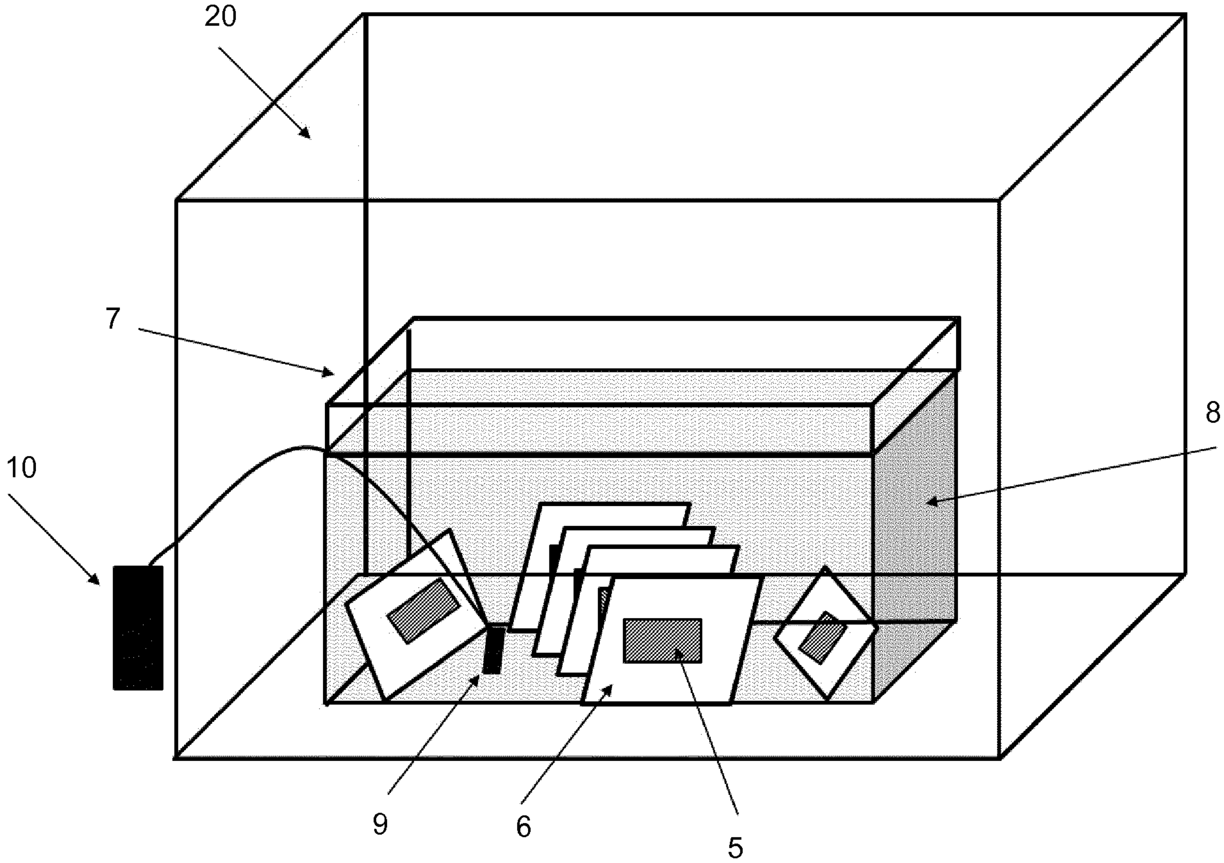


Abb. 6 a)

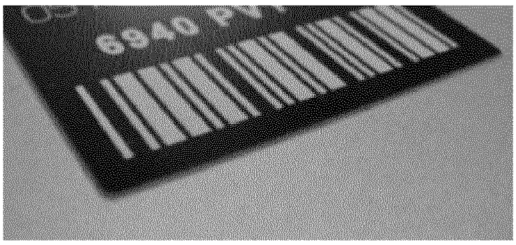

Abb. 6b

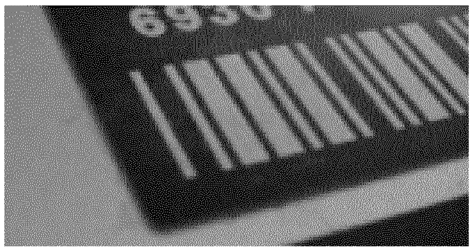

Abb. 7a)

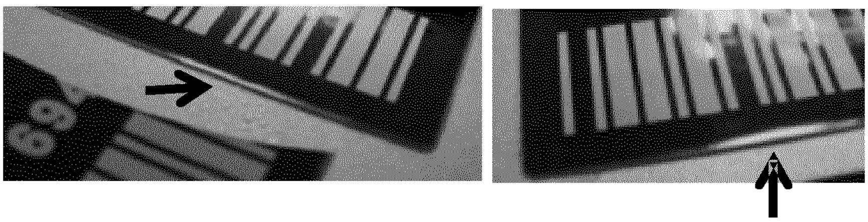

Abb. 7b)

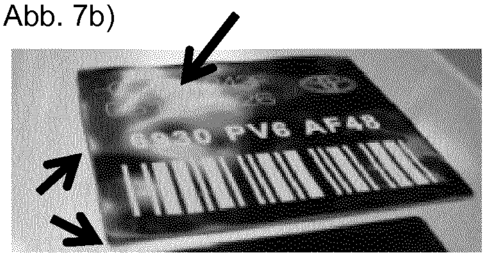


Abb. 8 a)

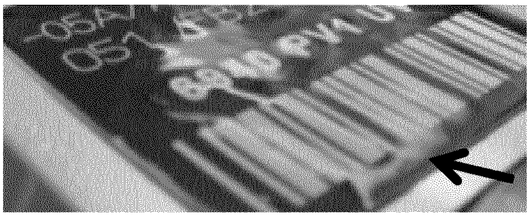

Abb. 8 b)

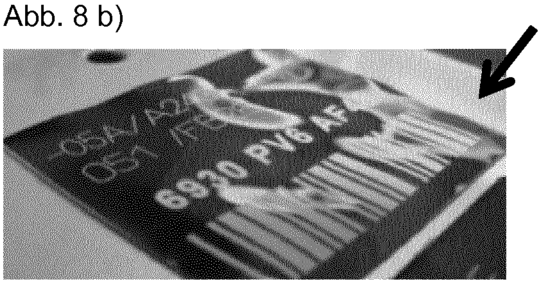

Abb. 8 c)

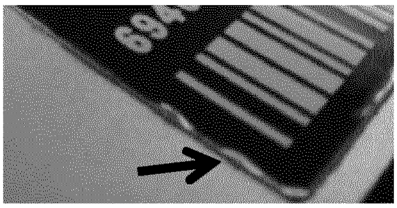

Abb. 8 d)

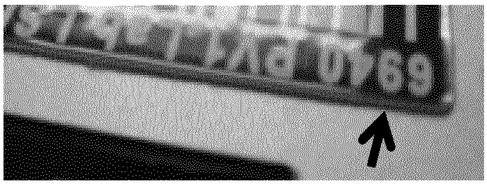

Abb. 9a)

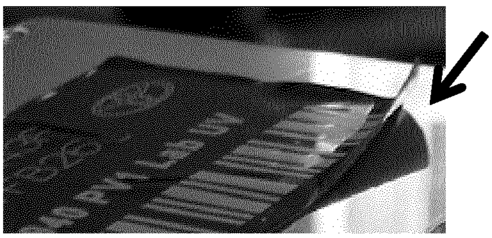

Abb. 9b)

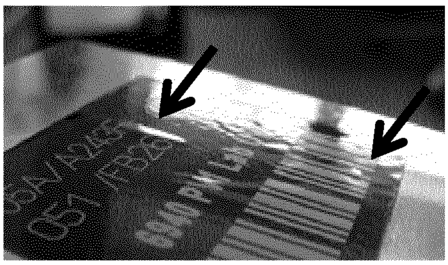

Abb. 10a)

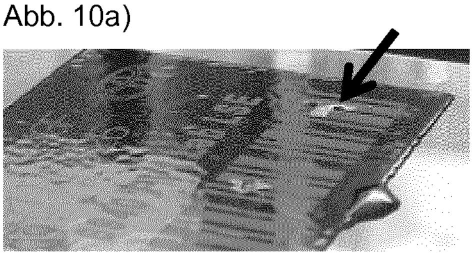

Abb. 10b)

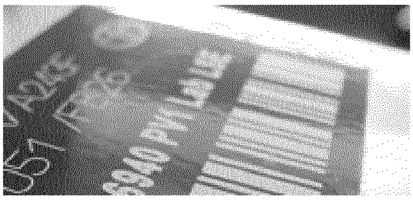

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 8130861 U1
- DE 10048665 A1
- DE 10142638 A1
- DE 102005061125 A1
- EP 2116584 A
- EP 2179858 A1


### In der Beschreibung aufgeführte Nicht-Patentliteratur


- *CHEMICAL ABSTRACTS,* 63738-22-7
- *CHEMICAL ABSTRACTS,* 65992-66-7
- **HANS KITTEL ; JÜRGEN SPILLE.** Lehrbuch der Lacke und Beschichtungen. Hirzel Verlag, 2003, vol. 5